# FASCICULE DE BREVET EUROPEEN

(11) **EP 2 720 528 B1**
(45) Date de publication et mention de la délivrance du brevet: **30.12.2015**
(21) Numéro de dépôt: 12728576.5
(22) Date de dépôt: 20.06.2012
(51) Int. Cl.: A01G 3/04

(54) **MACHINE A TIRER AUTOMATIQUEMENT LES SARMENTS DE VIGNE TAILLES**
MASCHINE ZUM AUTOMATISCHEN ZIEHEN VON ABGESCHNITTENEN WEINREBEN
MACHINE FOR AUTOMATICALLY PULLING CUT VINE STEMS

(30) Priorité: 20.06.2011 FR 1155416
(43) Date de publication de la demande: 23.04.2014
(73) Titulaire: Dezé, Jean-Yves, 49400 Souzay-Champigny (FR); Andelfinger, Didier, 68000 Colmar (FR)
(72) Inventeur: Dezé, Jean-Yves, 49400 Souzay-Champigny (FR); Andelfinger, Didier, 68000 Colmar (FR)
(74) Mandataire: AMMANN PATENTANWÄLTE AG BERN
(86) Numéro de dépôt international: PCT/EP2012/061846
(87) Numéro de publication internationale: WO 2012/175560

(56) Documents cités:
- EP-A2- 2 057 893
- WO-A1-2009/022915
- FR-A1- 2 799 931
- US-A1- 2002 043 061

## Description

La présente invention concerne, de manière générale, le domaine de la culture de la vigne, et plus particulièrement l'opération spécifique consistant à tirer les sarments de vigne taillés.

Le cycle de culture annuel de la vigne commence par la taille, qui consiste à couper les bois de vigne, aussi appelés sarments, pour ne laisser qu'un long bois fructifère par cep de vigne, ou pied de vigne. Une telle machine est connue par EP-2 057 893 A2.

Des piquets sont généralement plantés le long des rangs de vigne et sont reliés par un ou deux fils de fer, dit de palissage, auxquels s'accrochent les sarments au cours de leur croissance, par la formation de vrilles.

Ainsi, après l'opération de taille, les sarments, à savoir les sarments taillés et le long bois fructifère, restent accrochés aux fils de palissage.

Il est donc nécessaire de décrocher les sarments taillés, ou les « tirer », ce qui est actuellement fait manuellement par le tailleur.

Cette opération est extrêmement fastidieuse et coûteuse en main d'oeuvre, de sorte qu'il existe un besoin pour une machine permettant de tirer automatiquement les sarments de vigne taillés.

La présente invention vise à proposer une telle machine et a pour objet une machine à tirer automatiquement les sarments de vigne tailles accrochés par des vrilles à un fil de palissage reliant des piquets verticaux installés le long d'un rang de ceps de vigne à partir de chacun desquels s'étend un long bois fructifère.

Une telle machine est définie dans la revendication 1:
1. Machine a tirer automatiquement les sarments de vigne taillés (S) accrochés par des vrilles à un fil de palissage (F) reliant des piquets verticaux (P) installés le long d'un rang de ceps de vigne (C) à partir de chacun desquels s'étend un long bois fructifère (B), caractérisée en ce qu'elle comprend:
   - un dispositif (3; 110) de saisie des sarments comprenant un élément rotatif autour d'un arbre vertical et s'étendant dans un plan horizontal et présentant sur sa surface circonférentielle des échancrures (24) de saisie et d'entraînement des sarments taillés (S) ;
   - un dispositif de transfert (4) comprenant un élément de transfert (28; 56; 122) ayant des échancrures de transfert (29; 123), la projection de la trajectoire des échancrures sur le plan horizontal coupant la projection de la trajectoire des échancrures de saisie à une entrée du dispositif de transfert, rendant le dispositif de transfert capable d'enlever les sarments des échancrures de saisie et de les entraîner vers une sortie du dispositif de transfert;
   - un dispositif de décrochage (5) des sarments taillés (S) comprenant des moyens de capture (33, 34, 35) des sarments taillés capable d'exercer une force de traction généralement supérieure à la résistance des vrilles accrochant les sarments taillés (S) aux fils de palissage, la trajectoire des échancrures du dispositif de transfert s'étendant dans un espace allant du plus près des moyens de décrochage au dépassement de ces derniers de sorte que les moyens de capture sont capables d'attraper un sarment entraîné par le dispositif de transfert,
   où les échancrures sont conformées de telle sorte que le bois fructifère (B) non-taillé soit non arraché du cep et ménagé.
   Les revendications suivantes définissent des modes d'exécution préférés:
2. Machine selon la revendication 1, caractérisée en ce que l'élément rotatif comprend au moins un disque de saisie (23; 110) comportant périphériquement des échancrures (24; 111) délimitées par des dents capables d'entraîner des sarments taillés (S).
3. Machine selon la revendication 2, caractérisée en ce que le disque de saisie (23) est agencé de façon à lui permettre un mouvement sous l'effet d'un élément de rappel, le rendant capable de contourner un piquet (P).
4. Machine selon une des revendications 1 à 3, caractérisée en ce que le dispositif de transfert (4) comprend:
   - au moins une roue (56) comportant des échancrures (57) à sa périphérie, la roue étant entraînée en sens opposé au disque de saisie (23) au lieu de coupe avec celui-ci; ou
   - un moyen de transmission de mouvement (28; 122) pourvu de griffes (29; 123), le moyen de transmission de mouvement étant entraîné en sens opposé au disque de saisie (23) au lieu de coupe avec celui-ci.
5. Machine selon la revendication 4, caractérisée en ce que le dispositif de décrochage comprend deux corps rotatifs (33, 34; 35) en contact l'un à l'autre, cette zone de contact constituant la partie capable d'exercer la force de traction, les corps rotatifs étant entraînés en rotation de manière que leurs surfaces dans la zone de contact avancent à la même vitesse et dans la même direction, et que dans l'un des deux corps rotatifs est intégrée une roue d'entraînement (129) autour de laquelle s'étend le moyen de transmission de mouvement du dispositif de transfert (122) afin de l'entraîner.
6. Machine selon une des revendications 4 à 5, caractérisée en ce que le moyen de transmission de mouvement du dispositif de transfert est une chaîne (122) portant des griffes (123).
7. Machine selon une des revendications 1 à 6, caractérisée en ce qu'au-dessus et/ou au-dessous du dispositif de transfert (4), un dispositif de guidage (47; 47, 140) formant une surface inclinée est prévu afin de réaliser un effet entonnoir pour les sarments (S) entraînés par le dispositif de transfert.

Des autres variantes préférées sont:
La machine est destinée à être attelée à l'avant d'un véhicule agricole et étant caractérisée par le fait qu'elle comprend :
   - un châssis de support ayant des moyens pour sa fixation au tracteur et s'étendant dans des directions longitudinale et transversale qui correspondent, une fois le châssis de support fixé au véhicule agricole, respectivement à la direction suivant laquelle s'étend le rang de ceps et à la direction transversale à celle-ci ;
   - un portique fixé au châssis de support et comprenant un ensemble bras qui est monté pivotant par rapport au châssis de support et à une région d'extrémité en porte-à-faux de ce dernier, dans la direction transversale ; un dispositif de saisie des sarments taillés et des longs bois fructifères, comprenant :
      - un arbre d'entraînement vertical relié à rotation à la région d'extrémité en porte-à-faux du portique, au moins un disque de saisie solidaire de l'arbre d'entraînement et présentant sur sa surface circonferentielle des échancrures de saisie et d'entraînement des sarments taillés et des longs bois fructifères, et
      - un moteur relié à l'arbre d'entraînement et destiné à l'entraîner en rotation dans le sens ramenant vers le châssis de support les sarments taillés et les longs bois fructifères saisis par le ou les disques de saisie ;
      - un dispositif de transfert des sarments taillés, comprenant :
      - un élément de transfert relié à rotation au châssis de support et présentant sur son extérieur des échancrures de saisie et d'entraînement des sarments taillés préalablement saisis par le ou les disques de saisie, la projection de la trajectoire des échancrures de l'élément de transfert sur un plan horizontal coupant, à l'entrée du dispositif de transfert, la projection de la trajectoire des échancrures du ou des disques de saisie sur ce même plan horizontal, et des moyens d'entraînement en rotation de l'élément de transfert, agencés pour le faire tourner dans le sens de rotation opposé à celui des disques de saisie ;
   - et un dispositif de décrochage des sarments taillés disposé en sortie du dispositif de transfert et comprenant des moyens de capture des sarments taillés et de traction de ces derniers dans la direction opposée au dispositif de transfert et avec une force de traction supérieure à la résistance des vrilles accrochant les sarments taillés au fil de palissage.

Lorsque le véhicule agricole avance le long d'un rang de vigne et que le dispositif de saisie se trouve en position normale de fonctionnement, à savoir la position dans laquelle le ou les disques de saisie sont en porte-à-faux du châssis du support sur une distance telle que leurs échancrures peuvent venir saisir les sarments accrochés aux fils de palissage, les sarments sont saisis par le ou les disques de saisie, entraînés vers le véhicule agricole et le châssis de support jusqu'à ce que les échancrures dans lesquelles sont saisis les sarments s'alignent avec des échancrures de l'élément de transfert, moment où les sarments sont libérés du ou des disques de saisie par les échancrures de l'élément de transfert, puis les sarments taillés sont entraînés par l'élément de transfert vers le dispositif de décrochage, le long bois fructifère glissant sur l'élément de transfert pour s'en dégager. Le fait que les sarments taillés sont saisis et tirés par le côté permet de ne prévoir qu'une seule coupe par sarment lors de la taille.

En particulier, le porte-à-faux de l'ensemble bras du portique peut être tel qu'en position normale de fonctionnement, l'axe de rotation du ou des disques de saisie est décalé des fils de palissage dans la direction transversale, la distance de décalage étant telle qu'une partie du ou des disques de saisie s'étend sur le côté, par rapport aux fils de palissage, où se trouve le véhicule agricole.

Le portique peut en outre comprendre des moyens de commande du pivotement de l'ensemble bras, agencés pour solliciter en permanence l'ensemble bras dans la direction ramenant l'ensemble bras à la position normale de fonctionnement du dispositif de saisie.

Le dispositif de saisie peut comprendre deux disques de saisie écartés l'un de l'autre, une partie de l'élément de transfert s'étendant entre les deux disques de saisie.

Le fait de prévoir deux disques a comme avantage de mieux guider les sarments pour les garder dans la position verticale alors qu'ils ont tendance à glisser à l'horizontale.

De préférence, les échancrures du ou des disques de saisie sont régulièrement réparties sur la surface circonférentielle du ou de chaque disque de saisie.

Les échancrures du ou des disques de saisie peuvent être de différentes formes, par exemple en U.

De préférence, les échancrures du ou des disques de saisie sont à fond cylindrique, dont le rayon est avantageusement de 3,5 cm. L'épaisseur des disques de saisie est choisie pour obtenir une surface de contact entre les disques de saisie et les sarments qui est suffisamment grande pour que les sarments soient saisis par les êchancrures tout en évitant le sectionnement des petits rameaux, qui sinon tomberaient sous le rang de vigne et ne seraient ainsi pas broyés par un broyeur porté par le véhicule agricole.

Avantageusement, l'épaisseur des disques de saisie se situe dans une plage allant de 2 cm à 3 cm.

L'élément de transfert peut être formé par une courroie présentant sur sa surface extérieure des saillies ou griffes réparties suivant la longueur de la courroie et éspacées les unes des autres de telle sorte que l'espace entre deux saillies successives constitue une échancrure de saisie et d'entraînement des sarments taillés.

Les moyens d'entraînement en rotation de la courroie peuvent comprendre une plaque support fixée au châssis de support et s'étendant transversalement à et en porte-a-faux de ce dernier, une roue d'entraînement reliée à rotation à la plaque support dans une région d'extrémité de cette dernière dans la direction transversale, une poulie reliée à rotation à la plaque support dans l'autre région d'extrémité de cette dernière dans la direction transversale, et un moteur destiné à entraîner en rotation la roue d'entraînement, la courroie étant enroulée sur sa surface intérieure sur la roue d'entraînement et la poulie.

En variante, l'élément de transfert peut être formé par une roue à denture extérieure, les dents étant dimensionnées de telle sorte que l'espace entre deux dents successives constitue une échancrure de saisie et d'entraînement des sarments taillés.

De préférence, les moyens de capture et de traction des sarments taillés peuvent comprendre : deux ensembles roues disposés en sortie du dispositif de transfert et portés à rotation par le châssis de support de telle sorte que leurs axes de rotation sont parallèles, et de préférence verticaux, et que les surfaces circonférentielles des deux ensembles roues sont comprimées les unes contre les autres, et des moyens d'entraînement en rotation des ensembles roues, agencés pour faire tourner ces derniers dans des sens qui sont contraires et tels que les ensembles de roue tirent les sarments taillés capturés entre les surfaces circonférentielles des deux ensembles roues à l'opposée du dispositif de transfert.

De préférence, dans le cas où les axes de rotation des ensembles roues sont verticaux et les ensembles roues sont disposés dans la direction longitudinale du châssis de support, l'ensemble roue le plus proche du moyen de fixation du châssis de support au véhicule agricole peut comprendre deux roues écartées l'une de l'autre et dont les surfaces circonférentielles sont comprimées contre celle de l'autre ensemble roue, l'élément de transfert étant disposé par rapport au châssis de support de telle sorte que l'élément de transfert s'étend dans l'espace entre les deux roues et que les sarments taillés sortent des échancrures de l'élément de transfert dans le plan généré par la direction transversale du châssis de support et la ligne de contact entre les deux ensembles roues.

De préférence, la surface circonférentielle des ensembles roues, le cas échéant des roues, est structurée, de façon à améliorer l'effet de capture des sarments taillés entre les deux ensembles roues.

Des pneumatiques sont avantageusement montés sur les roues et leur bande de roulement, qui est compressible et est un exemple de surface structurée, constitue la surface circonferentielle des ensembles roues.

De préférence, le portique comprend un mât de portique vertical et fixé au châssis de support, un premier bras fixé d'équerre en partie haute du mât de portique et s'étendant dans la direction longitudinale du châssis de support, à l'opposé du dispositif de transfert et du dispositif de décrochage, un second bras relié à pivotement au premier bras et s'étendant en porte-à-faux du châssis de support, et un moyen de commande du pivotement du second bras par rapport au premier bras, le dispositif de saisie étant relié à la région d'extrémité du second bras en porte-à-faux du châssis de support.

Une telle configuration de portique permet d'obtenir une machine extrêmement compacte et une ouverture du portique telle que le véhicule agricole, après avoir fini de traiter un rang de vigne, peut commencer à traiter le rang de vigne adjacent par simple virage, sans manoeuvres de conduite supplémentaires, telles que des marches arrière et avant répétées.

De préférence, l'ensemble bras du portique, le cas échéant le second bras, est télescopique, de façon à permettre le réglage de la distance sur laquelle son extrémité est en porte-à-faux du châssis de support. On peut ainsi régler la position des disques de saisie en fonction de la largeur du rang de vigne.

De préférence, le châssis de support comprend une platine de fixation au tracteur, un mât vertical fixé à la platine et un cadre mobile comprenant un coulisseau vertical monté verticalement mobile sur le mât et un moyen de commande du déplacement du coulisseau vertical, le portique étant fixé au cadre mobile. Le cadre mobile peut comprendre en outre au moins une poutre formant glissière fixée horizontalement au coulisseau vertical et dans la direction transversale du châssis de support, au moins un coulisseau horizontal reçu mobile dans la poutre formant glissière et un moyen de commande du déplacement du coulisseau horizontal, le portique, le dispositif de transfert et le dispositif de décrochage étant fixés au coulisseau horizontal.

Le fait de prévoir un cadre mobile verticalement et/ou horizontalement permet d'obtenir le meilleur réglage en position des disques de saisie, en fonction de la hauteur et de la largeur du rang de vigne à traiter.

De préférence, une tôle de guidage est fixée au châssis de support, le cas échéant au ou à un coulisseau horizontal, et s'étend vers le bas et l'opposé du châssis de support, la tôle de guidage servant de surface d'appui des parties basses des sarments taillés lorsqu'ils sont entraînés par les disques de saisie et l'élément de transfert, pour les faire fléchir vers le haut afin de les libérer d'un fil de palissage s'étendant en partie basse des piquets.

La présente invention a également pour objet un véhicule agricole équipé d'une machine telle que définie ci-dessus.

Le véhicule agricole est avantageusement équipé d'un broyeur positionné pour broyer les sarments taillés se trouvant au sol.

Pour mieux illustrer l'objet de la présente invention, on va en décrire ci-après un mode de réalisation particulier avec référence aux dessins annexés.

Sur ces dessins :
la Figure 1 est une vue de dessus de l'avant d'un tracteur circulant entre deux rangs de vigne et à l'avant duquel a été fixée la machine selon la présente invention ;
les Figures 2, 3, 4 et 5 sont des vues de l'avant du tracteur et de la machine selon la présente invention, respectivement d'un premier côté, de face, du côté opposé au premier côté, et en perspective de dessus ;
les Figures 6 et 7 sont des vues de face et de côté de l'avant du tracteur et de la machine selon la présente invention, montrant les sarments, accrochés par leurs vrilles aux fils de palissage, lorsqu'ils sont saisis par les disques de saisie ;
les Figures 8 et 9 sont des vues analogues aux Figures 6 et 7, montrant les sarments, encore accrochés aux fils de palissage, lorsqu'ils passent des disques de saisie au dispositif de transfert ;
les Figures 10 et 11 sont des vues analogues aux Figures 6 et 7, montrant les sarments taillés, toujours accrochés aux fils de palissage, lorsqu'ils passent du dispositif de transfert au dispositif de décrochage des sarments taillés ;
les Figures 12 et 13 sont des vues analogues aux Figures 6 et 7, montrant les sarments taillés lorsqu'ils sont décrochés des fils de palissage par le dispositif de décrochage ;
les Figures 14 et 15 sont des vues analogues aux Figures 6 et 7, représentant les sarments de vigne lors de leur éjection hors du dispositif de décrochage ;
les Figures 16, 17 et 18 sont des vues de dessus de la machine selon la présente invention, respectivement dans la position normale de fonctionnement juste avant que les disques de saisie n'entrent en contact avec un piquet du rang de vigne, dans la position où les disques de saisie contournent le piquet et dans une position où les disques de saisie ont contourné le piquet et reviennent à la position normale de fonctionnement;
la Figure 19 est une vue en perspective de dessus de la machine selon la présente invention, dans la position de rentrée et de sortie de rangs de vigne, dans laquelle l'ouverture du portique est maximale;
les Figures 20 et 21 sont des vues respectivement de dessus et de face de la machine selon une variante de la présente invention; et
Les Figures 22 à 24 représentent une autre variante de la machine par des vues partielles de face, en perspective et de dessus.

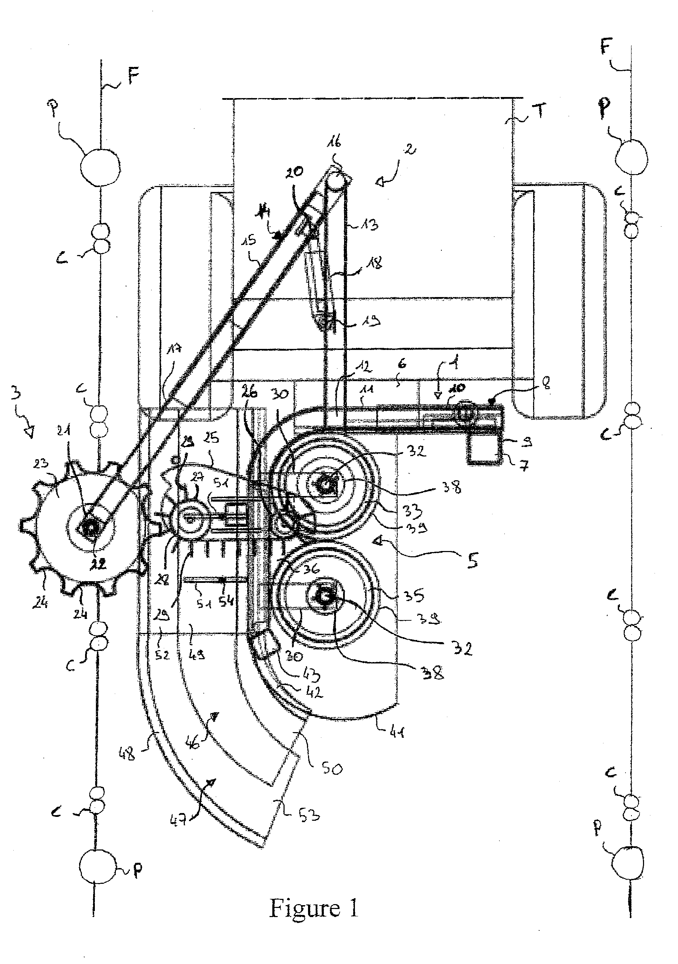

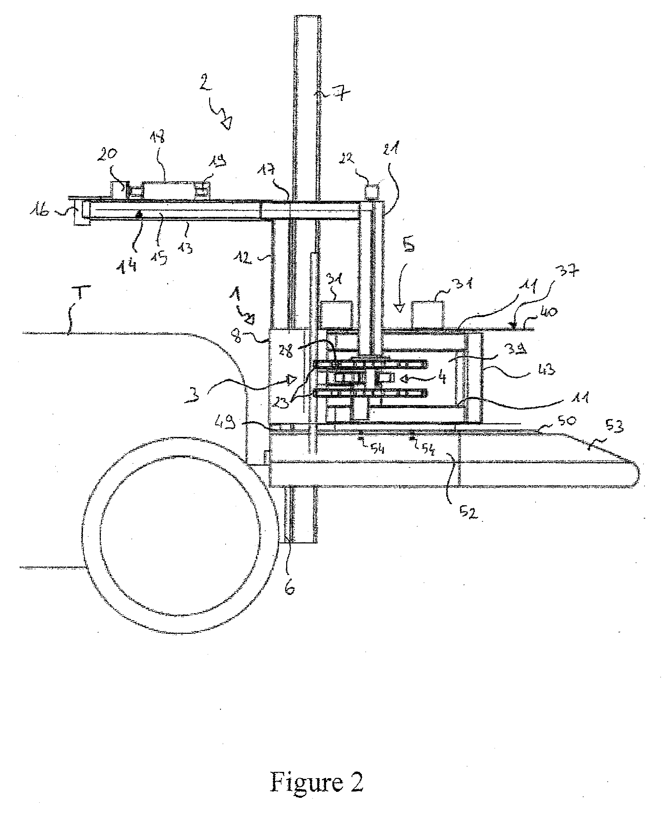

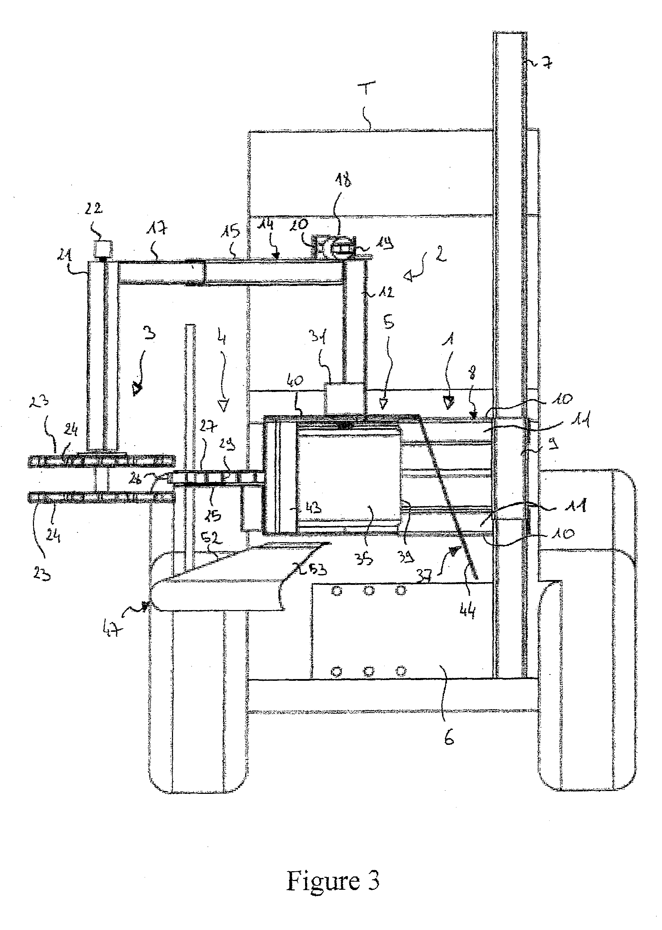

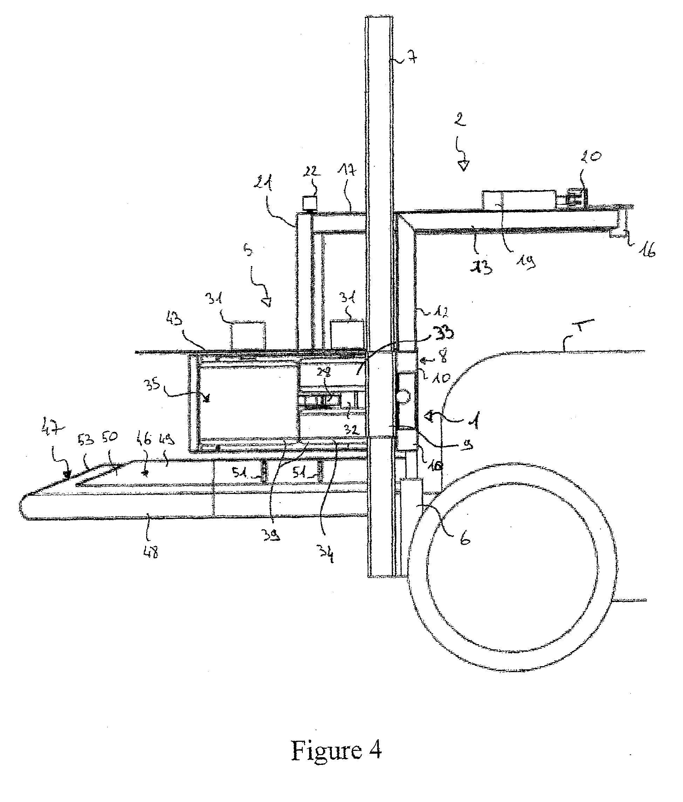

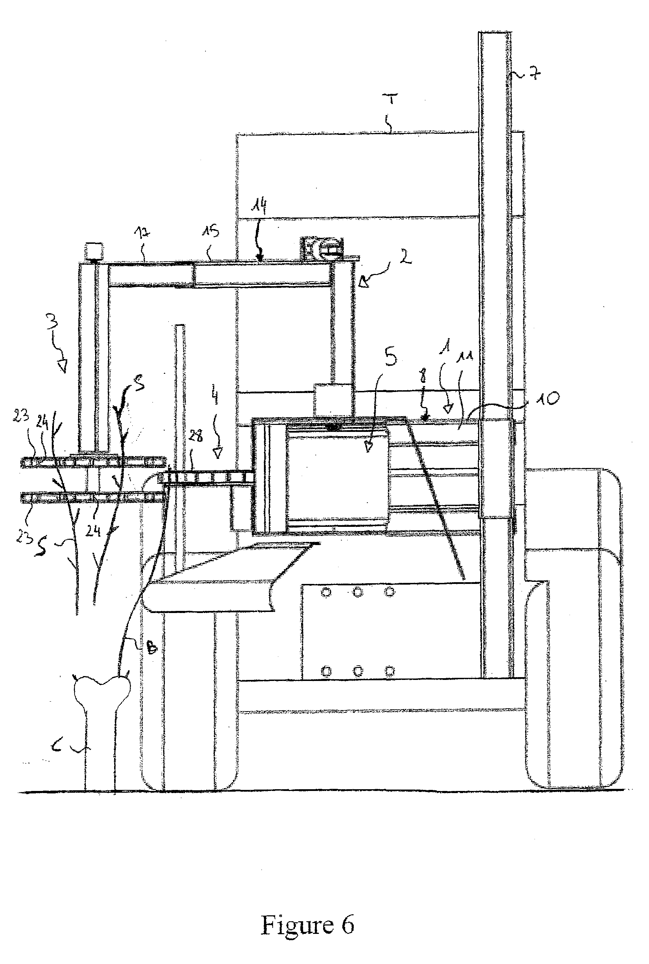

Si l'on se réfère aux Figures 1 à 5, on peut voir que l'on y a représenté la machine à tirer les sarments selon un mode de réalisation particulier de la présente invention, montée sur l'avant d'un tracteur T qui se déplace entre deux rangs de vigne, formés chacun par une succession de ceps C à partir de chacun desquels s'étend un long bois fructifère B (Figures 6 et suivantes), des piquets P étant plantés à intervalles réguliers et entre lesquels s'étendent deux fils de palissage F servant à la culture de la vigne, des sarments S (Figures 6 et suivantes) préalablement taillés étant accrochés par leurs vrilles au fil de palissage F supérieur.

Dans ce qui suit, les termes « gauche » et « droit » se rapportent respectivement à la gauche et à la droite lorsque l'on se place en position de conduite du tracteur T et les termes « longitudinal » et « transversal » désignent la direction correspondant à la direction respectivement longitudinale et transversale du tracteur T. Lorsque le tracteur T se trouve entre deux rangs de vigne, la direction longitudinale correspond à la direction du rang de vigne.

La machine selon la présente invention comprend principalement un châssis de support 1. un portique 2, un dispositif de saisie des sarments 3, un dispositif de transfert des sarments taillés 4 et un dispositif de décrochage (ou d'extraction) des sarments taillés 5.

Le châssis de support 1 comprend principalement une platine 6, vissée sur le porte-masse avant du tracteur T, un mât vertical 7, fixé à la platine 6 et se trouvant sur la gauche, et un cadre mobile 8 porté par le mât 7 de façon à pouvoir se déplacer verticalement le long de celui-ci.

Le cadre mobile 8 comprend principalement un coulisseau vertical 9, deux poutres formant glissières 10 et deux coulisseaux horizontaux 11.

Le coulisseau vertical 9 se présente sous la forme d'une pièce creuse de même section transversale que celle du mât 7 et qui y est montée de façon à pouvoir coulisser verticalement le long de celui-ci. Un vérin est prévu et disposé de manière à commander le déplacement et le positionnement du coulisseau vertical 9 sur le mât 7.

Les deux poutres formant glissières 10 sont creuses. Elles sont solidement fixées au coulisseau vertical 9, l'une au-dessus de l'autre, de façon à se déplacer avec lui. Elles s'étendent à l'horizontale et dans la direction transversale sur une distance ici inférieure à la largeur du tracteur T.

Chaque coulisseau horizontal 11 a la forme d'un L dont les deux branches rectilignes sont ici de même longueur et dont l'angle a été arrondi. Ce L peut être formé par une seule poutre que l'on a repliée ou par plusieurs segments de poutre fixés les uns aux autres, par exemple par soudage. Une première branche de chaque coulisseau horizontal 11 est reçue au moins partiellement dans une poutre formant glissière 10, d'une manière lui permettant de coulisser dans celle-ci. Un vérin est prévu et disposé de manière à commander le déplacement et le positionnement de chaque coulisseau horizontal 9 dans la poutre formant glissière 10 respective.

On constate donc que le cadre 8 est mobile d'un seul tenant verticalement, par déplacement du coulisseau vertical 9 le long du mât 7, et qu'une partie du cadre 8 est mobile horizontalement dans la direction transversale, par déplacement des coulisseaux horizontaux 11 dans les poutres formant glissières 10.

Le portique 2 comprend principalement un mât de portique 12, un premier bras 13 et un second bras 14.

Le mât de portique 12 s'étend à la verticale à partir du coulisseau horizontal 11 supérieur, auquel il est solidement fixé au voisinage de l'angle du L, sur la première branche, à savoir celle reçue dans la poutre formant glissière 10.

Le premier bras 13 est fixé d'équerre à l'extrémité supérieure du mât de portique 12 et s'étend vers l'arrière du tracteur T, à l'horizontale et dans la direction longitudinale. Le second bras 14 est télescopigue et comprend un premier segment de bras 15 dont une extrémité est reliée par une liaison pivot 16 à l'extrémité libre du premier bras 13, et un second segment de bras 17 s'étendant hors de l'autre extrémité du premier segment de bras 15.

Un vérin 18 s'étend entre les premier et second bras 13, 14, dans la région dans laquelle ils sont reliés l'un à l'autre, le corps du vérin 18 étant relié à pivotement au premier bras 13 en 19 tandis que l'extrémité libre de la tige du vérin 18 est reliée à pivotement au premier segment de bras 15 en 20. Ainsi, le déplacement de la tige du vérin 18 permet de faire pivoter le second bras 14 à l'opposé du ou vers le premier bras 13, ouvrant ou fermant respectivement le portique 2. Le vérin 18 est réglé pour que la tige soit en permanence soumise à un effort dans la direction la ramenant dans le corps du vérin 18, c'est-à-dire dans la direction de fermeture du portique 2.

Le dispositif de saisie des sarments 3 comprend principalement une poutre verticale 21, un arbre d'entraînement, un moteur 22 et deux disques de saisie 23.

La poutre verticale 21 est creuse et est fixée en partie haute à l'extrémité libre du second segment de bras 17. L'arbre d'entraînement s'étend à la verticale à l'intérieur de la poutre 21 et y est monté rotatif par l'intermédiaire de deux paliers logés chacun à une extrémité de la poutre verticale 21.

L'arbre d'entraînement est entraîné en rotation suivant l'axe vertical par le moteur 22, typiquement hydraulique, qui est monté sur l'extrémité libre du second segment de bras 17.

Les deux disques de saisie 23 sont reliés d'un seul tenant à l'arbre d'entraînement, dans sa partie basse et l'un au-dessus de l'autre, et tournent ainsi sur eux-mêmes, dans le sens contraire des aiguilles d'une montre, lorsque l'arbre d'entraînement est entraîné en rotation par le moteur 22.

La surface circonférentielie externe des disques de saisie 23 présente des échancrures 24 à fond cylindrique et régulièrement réparties sur la surface circonférentielle. Le rayon des échancrures 24 est de 3,5 cm.

Les disques de saisie 23 ont un rayon de 45 cm et une épaisseur de 2 à 3 cm.

Le dispositif de transfert des sarments taillés 4 comprend une plaque support 25, un moteur, une roue crantée 26, une poulie crantée 27 et une courroie de transfert 28.

La plaque support 25, dont le bord côté tracteur T a été replié d'équerre, est fixée à la seconde branche du coulisseau horizontal 11 supérieur, à savoir celle qui s'étend dans la direction longitudinale. En particulier, la plaque support 25 s'étend entre les secondes branches des deux coulisseaux horizontaux 11 et de part et d'autre du plan vertical comprenant ces secondes branches.

Le moteur hydraulique ou électrique, en particulier hydraulique, est fixé sur la plaque support 25 et son arbre de sortie entraîne en rotation la roue crantée 26, laquelle est montée rotative sur un axe vertical qui est fixé à la plaque support 25.

La poulie crantée 27 est montée librement pivotante sur un axe vertical qui est fixé à la plaque support 25.

Là roue crantée 26 et la poulie crantée 27 sont disposées de part et d'autre du plan vertical comprenant les secondes branches des coulisseaux horizontaux 11, la roue crantée 26 se trouvant côté mât 7 et la poulie crantée 27 se trouvant côté disques de saisie 23.

La courroie de transfert 28, d'une largeur de 2 à 3 cm, est crantée sur sa surface intérieure et est enroulée sur la roue crantée 26 et sur la poulie crantée 27, de façon à être entraînée en rotation lorsque le moteur entraîne en rotation la roue crantée 26.

La surface extérieure de la courroie de transfert 28 porte, espacées de 5 cm, des saillies 29 de forme rectangulaire et s'étendant sur toute la largeur de la courroie de transfert 28 et sur une distance de 3,5 cm vers l'extérieur. Les saillies 29 sont réalisées en un matériau sensiblement rigide, tel que le Nylon, l'acier.

On souligne ici que la plaque support 25 est positionnée pour se trouver à un niveau vertical se situant entre les deux disques de saisie 23, et que la poulie crantée 27 est positionnée pour que, projetées dans un même plan horizontal, la trajectoire suivie par les extrémités libres des saillies 29 coupe la trajectoire suivie par les extrémités libres des échancrures 24 des deux disques de saisie 23.

Le dispositif de décrochage des sarments taillés 5 comprend principalement deux platines 30, deux moteurs 31, deux arbres d'entraînement 32, trois roues 33, 34, 35 (moyens de capture ou de saisie), deux tôles de canalisation 36 et un capot de protection 37.

Les platines 30 sont de forme rectangulaire et sont solidement fixées à une extrémité sur le dessus de la seconde branche du coulisseau horizontal 11 supérieur, à distance l'une de l'autre, et des perçages ont été pratiqués dans leur région d'extrémité libre.

Les moteurs 31, de type hydraulique, sont chacun fixés sur une platine 30. L'arbre de sortie d'un moteur 31 s'étend à la verticale à travers le perçage de la platine 30 correspondante et est accouplé à un arbre d'entraînement 32 s'étendant lui aussi à la verticale.

Sur le premier arbre d'entraînement 32, qui se trouve dans la région des angles des coulisseaux horizontaux 11, sont fixés par boulonnage les moyeux 38 de deux premières roues 33, 34, et sur le second arbre d'entraînement 32 sont fixés par boulonnage le moyeu 38 de la troisième roue 35.

Les roues 33 et 34 comprennent chacune un pneumatique 39, sont disposées l'une au-dessus de l'autre, sans dépasser au-dessus et au-dessous des coulisseaux horizontaux 11, et sont écartées l'une de l'autre en créant un espace se trouvant à une hauteur correspondant à la hauteur de la courroie de transfert 28. Les roues 33 et 34 et la roue crantée 26 sont disposées pour que, projetées dans un même plan horizontal, la trajectoire suivie par les extrémités libres des saillies 29 coupe la circonférence externe des pneumatiques 39.

La roue 35 comprend un pneumatique 39 dont la largeur est sensiblement égale à la distance entre le flanc supérieur du pneumatique 39 de la roue supérieure 33 et le flanc inférieur du pneumatique 39 de la roue inférieure 34. La roue 35 se trouvant a l'horizontale, la largeur du pneumatique 39 correspond donc à la hauteur sur laquelle il s'étend.

Les platines 30 sont positionnées et le diamètre des roues 33, 34 et 35 est choisi pour que les pneumatiques 39 des première et deuxième roues 33, 34 soient en contact avec le pneumatique 39 de la troisième roue 35, avec une légère compression entre eux.

Un moteur 31 entraîne le premier arbre d'entraînement 32 en rotation dans le sens contraire des aiguilles d'une montre tandis que l'autre moteur 31 entraîne le second arbre d'entraînement 32 en rotation dans le sens des aiguilles d'une montre, de telle sorte que les pneumatiques 39 sont contrarotatifs.

Les tôles de canalisation 36 sont de forme sensiblement triangulaire et sont chacune fixées suivant un bord rectiligne au centre, dans la direction longitudinale, de la seconde branche d'un coulisseau horizontal 11, de telle sorte que les deux bords libres, qui sont courbés pour que leur arrondi corresponde sensiblement au rayon des pneumatiques 39, sont en regard de la bande de roulement des pneumatiques 39. En d'autres, les bords libres de la tôle de canalisation 36 supérieure sont à une hauteur légèrement inférieure à la hauteur du flanc supérieur des pneumatiques 39 de la roue supérieure 33 et de la roue 35 et les bords libres de la tôle de canalisation 36 inférieure sont à une hauteur légèrement supérieure à la hauteur du flanc inférieur des pneumatiques 39 de la roue inférieure 34 et de la roue 35. Enfin, les dimensions des tôles de canalisation 36 sont telles que leurs bords libres se trouvent à proximité étroite des pneumatiques 39 mais sans les toucher.

Les roues 33, 34, 35 sont entourées par le capot de protection 37 qui est formé par une tôle plane rectangulaire 40 fixée suivant un premier grand côté sur la seconde branche du coulisseau horizontal 11 supérieur de façon à s'étendre au-dessus des pneumatiques 39, la tôle 40 comportant des ouvertures pour le passage des arbres de sortie des moteurs 31, par deux tôles cintrées 41 appliquées l'une contre les parties courbées des coulisseaux horizontaux 11 et l'autre contre deux petites poutres courbées 42 s'étendant à partir d'un montant 43 reliant les extrémités libres des coulisseaux horizontaux 11, et par une tôle plane rectangulaire inclinée 44 dont un grand côte est fixé au second grand côté de la tôle 40.

Le capot de protection 37 entoure donc les pneumatiques 39 en laissant une ouverture vers le bas et une ouverture latérale entre les deux secondes branches des coulisseaux horizontaux 11.

La machine selon la présente invention comporte en outre un dispositif de guidage extérieur 45, comprenant une plaque de support 46, une tôle de guidage 47 et un tube de rigidification 48.

La plaque de support 46 comprend une partie rectangulaire plane 49, par laquelle elle est fixée à la seconde branche du coulisseau horizontal 11 inférieur, et une partie galbée 50 fixée au prolongement inférieur mentionné ci-dessus.

Deux fentes traversantes 51 sont pratiquées dans la partie plane 49 et s'étendent dans la direction transversale.

La tôle de guidage 47 suit la même forme que la plaque de support 46, et comprend ainsi une partie rectangulaire plane 52, dans laquelle ont été pratiqués deux trous traversants dont l'écartement correspond à celui des fentes 51, et une partie galbée 53. La tôle de guidage 47 est fixée de manière amovible sur la plaque de support 46 par deux boulons s'étendant chacun dans l'une des fentes 51 et dans un trou correspondant de la partie plane 52 et par deux écrous 54 vissés sur les boulons de façon à serrer la partie plane 52 contre la partie plane 49.

Le tube de rigidification 48 est fixé au bord inférieur de la tôle de guidage 47 et sert à empêcher une déformation de cette dernière.

Enfin, un broyeur est porté par l'arrière du tracteur T.

On va maintenir décrire le fonctionnement de la machine selon la présente invention, avec référence aux Figures 6 à 15, et en décrivant les différentes étapes de décrochage des sarments taillés S automatiquement réalisées par la machine pour décrocher les sarments taillés S d'un cep C tout en laissant intact son long bois fructifère B. La tôle 44 n'est pas représentée sur les Figures 1, 9, 11, 13 et 15.

Avant toute chose, il convient de régler la position des disques de saisie 23 pour les placer dans la position normale de fonctionnement. Pour ce faire, il suffit d'ajuster leur hauteur par déplacement du cadre mobile 8 le long du mât 7 et leur position dans la direction transversale par déplacement des coulisseaux horizontaux 11 dans les poutres formant glissières 10 et réglage de l'extension du second segment de bras 17 par rapport au premier segment de bras 15.

La longueur des poutres formant glissières 10 doit être suffisante pour permettre un déplacement des coulisseaux horizontaux 11 sur une plage suffisante pour s'adapter à la largeur du rang de vigne à traiter.

Il convient de noter ici que le rayon des disques de saisie est normalement choisi en fonction de la largeur du rang de vigne à traiter. Un rayon se situant entre 40 ; et 50 cm convient dans la plupart des cas, compte tenu de la capacité de réglage fournie par le cadre mobile 8 et le second bras 14 du portique 2.

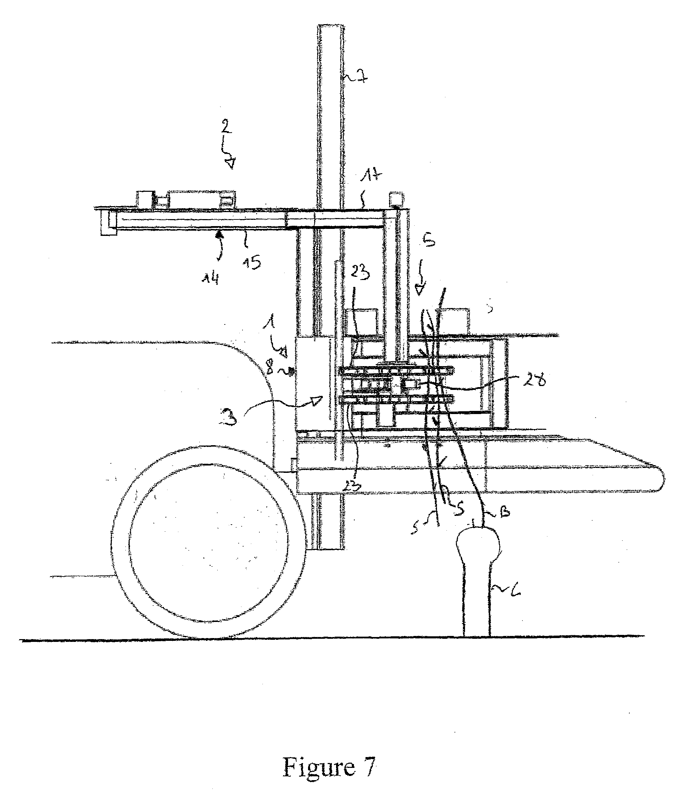

Si l'on se réfère tout d'abord aux Figures 6 et 7, on peut voir que l'on y a représenté la machine selon la présente invention lors de l'opération de saisie des sarments, à savoir les sarments taillés S et le long bois fructifère B.

Lorsque le tracteur T avance entre les deux rangs de vigne et que les disques de saisie 23 entraînés en rotation viennent en contact avec les sarments, ces derniers sont saisis dans les échancrures 24 et entraînés avec celles-ci vers la courroie de transfert 28, sur au plus un quart de tour des disques de saisie 23.

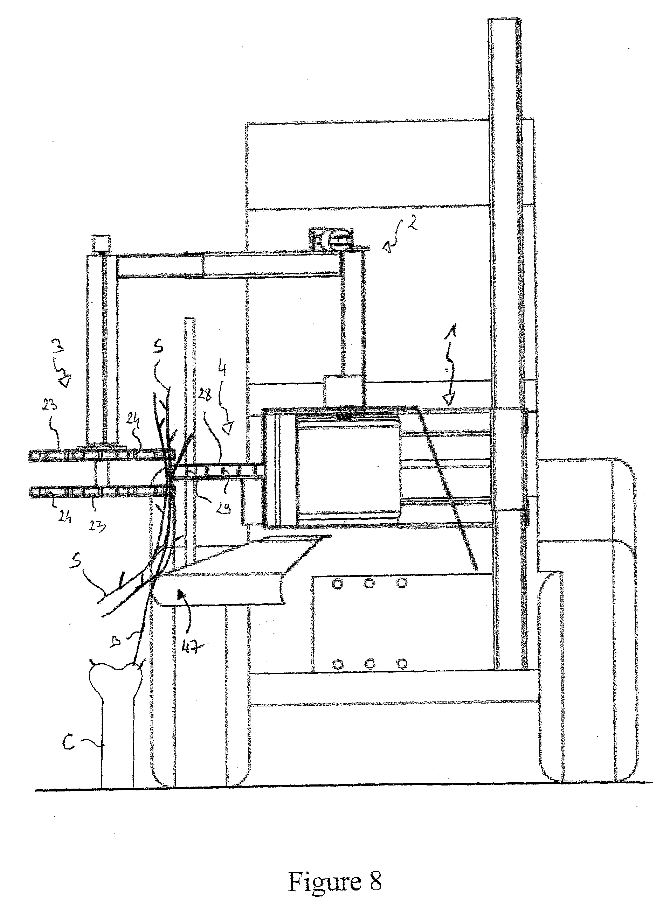

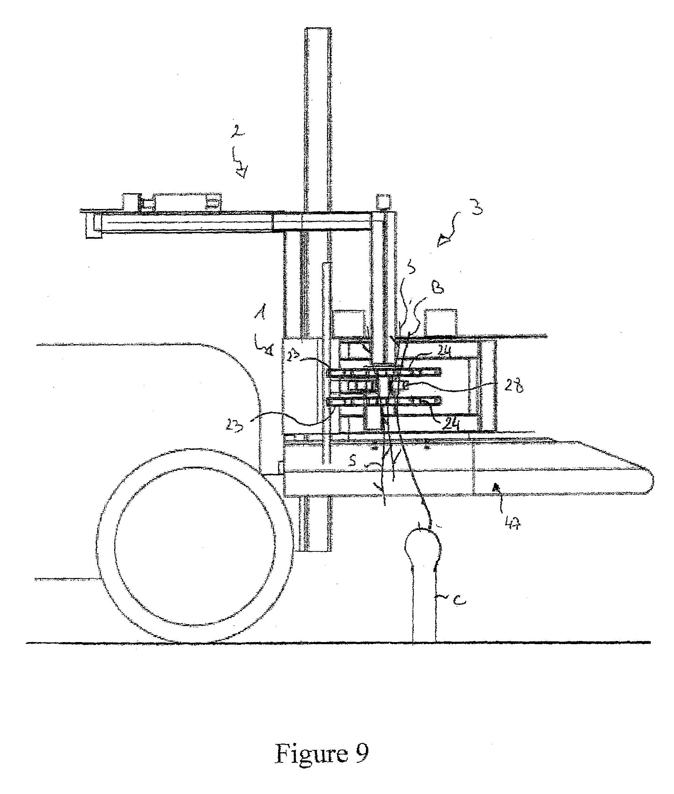

Les Figures 8 et 9 montrent la machine lorsque les sarments qui ont été saisis par les échancrures 24 ont été entraînés sur environ un quart de tour des disques de saisie 23 et arrivent à la zone où la trajectoire des circonférences des disques de saisie 23 coupe la trajectoire des extrémités libres des saillies 29 de la courroie de transfert 28, lorsque les trajectoires sont projetées sur un même plan horizontal.

Ainsi, dans cette position, l'échancrure 24 qui est tournée vers la courroie de transfert 28 est alignée verticalement avec au moins un espace libre entre deux saillies consécutives 29 de la courroie de transfert 28, de telle sorte que les sarments s'étendent à cet instant précis à la fois dans une êchancrure 24 et dans l'espace entre deux saillies consécutives 29.

On constate également que la partie basse des sarments vient s'appuyer contre la surface extérieure de la tôle de guidage 47 et fléchir vers le haut et l'extérieur, ce qui permet de libérer la partie basse des sarments du fil de palissage F inférieur (non représenté).

On souligne donc ici l'avantage de prévoir une telle tôle de guidage 47 ainsi qu'un réglage latéral de cette dernière, qui est ici obtenu par desserrage des écrous 54, déplacement de la tôle de guidage 47 par rapport à la plaque de support 46 avec guidage par les boulons s'étendant dans les fentes 51 et les trous de la tôle de guidage 47, et serrage des écrous 54 sur les boulons 55 une fois que la plaque de guidage 47 est à la bonne position dans la direction transversale. On peut ainsi optimiser la position de la tôle de guidage 47 en fonction du rang de vigne à traiter.

La courroie de transfert 28 tournant dans le sens contraire de celui des disques de saisie 23, les sarments sont retirés des échancrures et entraînés vers l'ouverture entre les deux secondes branches des coulisseaux horizontaux 11 par les saillies 29 de la courroie de transfert 28.

Les saillies 29 sont espacées les unes des autres et dimensionnées non seulement pour éviter le cisaillage des sarments, comme les disques de saisie 23, mais encore pour entraîner le long bois fructifère B tout en le laissant glisser. En d'autres termes, les sarments taillés S et le long bois fructifère B ne sont soumis à aucun effort de traction supérieur à la résistance des vrilles des sarments taillés S et de la liaison entre le long bois fructifère B et le cep C.

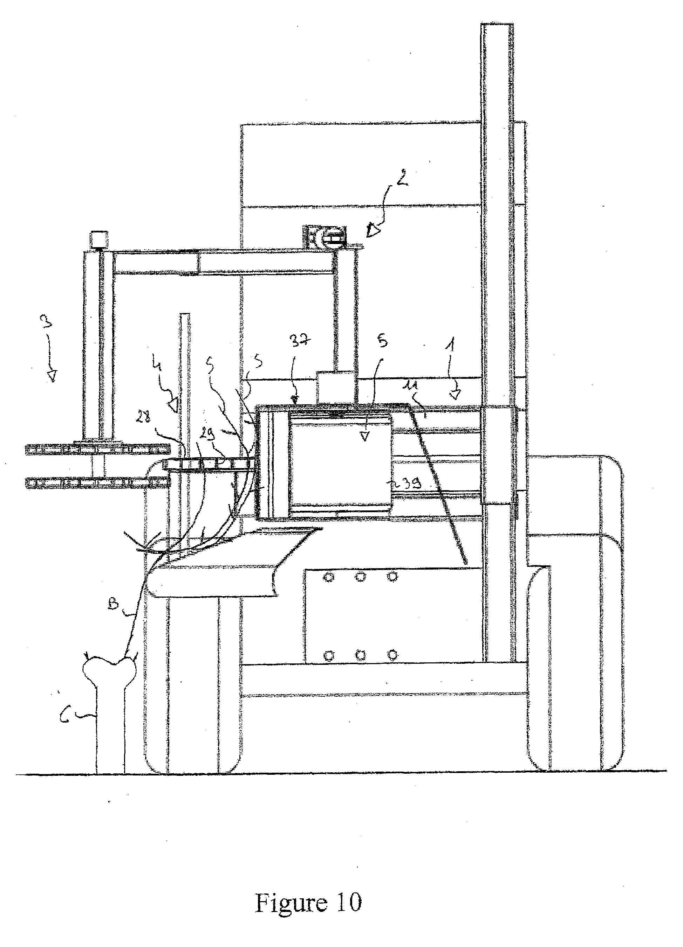

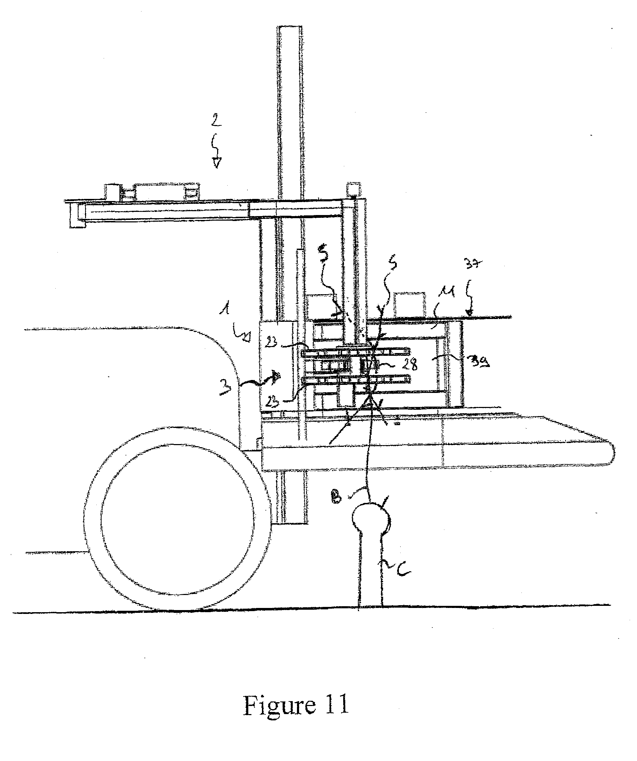

Sur les Figures 10 et 11, on a représenté les sarments taillés S après qu'ils ont été entraînés en partie à l'intérieur du capot de protection 37, les tôles de canalisation 26 les empêchant de s'échapper par le haut ou par le bas.

On peut voir que les parties hautes des sarments taillés S sont pliées vers le bas par le coulisseau horizontal 11 et que, lorsqu'une partie des sarments taillés S arrivent au niveau de la roue crantée 26, cette partie est directement capturée entre les pneumatiques 39, puisque la trajectoire des saillies 29 coupe la circonférence des pneumatiques 39 des roues 33 et 34, lorsque projetées sur un même plan horizontal. Comme indiqué ci-dessus, les pneumatiques 39 sont comprimés l'un contre l'autre et sont contrarotatifs, de telle sorte que les sarments taillés S sont tires vers l'autre côté de la machine, à l'opposé du fil de palissage F auquel ils sont attachés par leurs vrilles, avec un effort de traction supérieur à la résistance des vrilles.

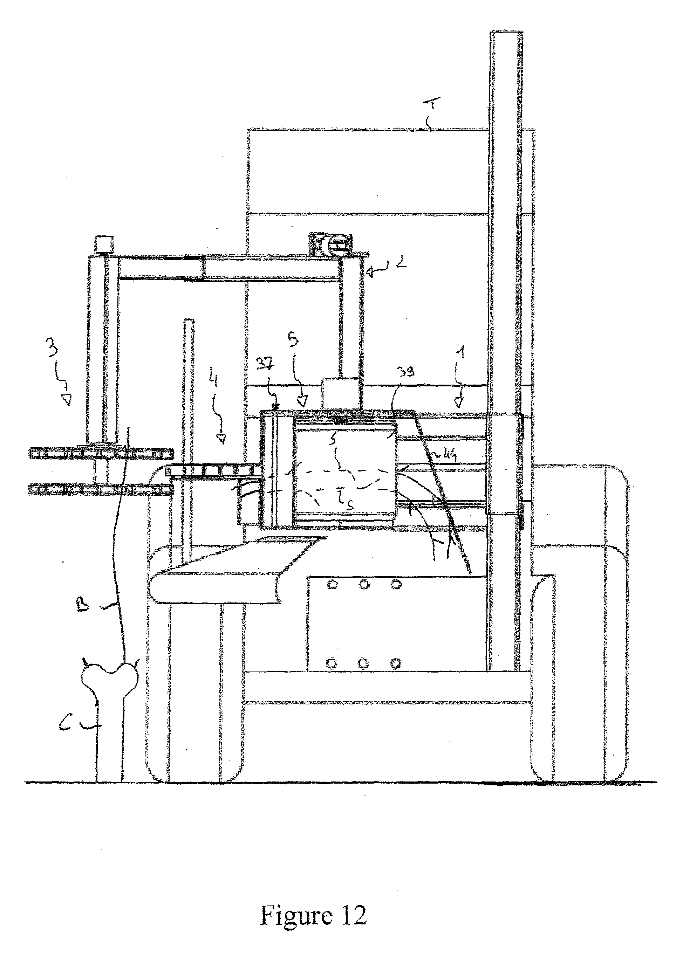

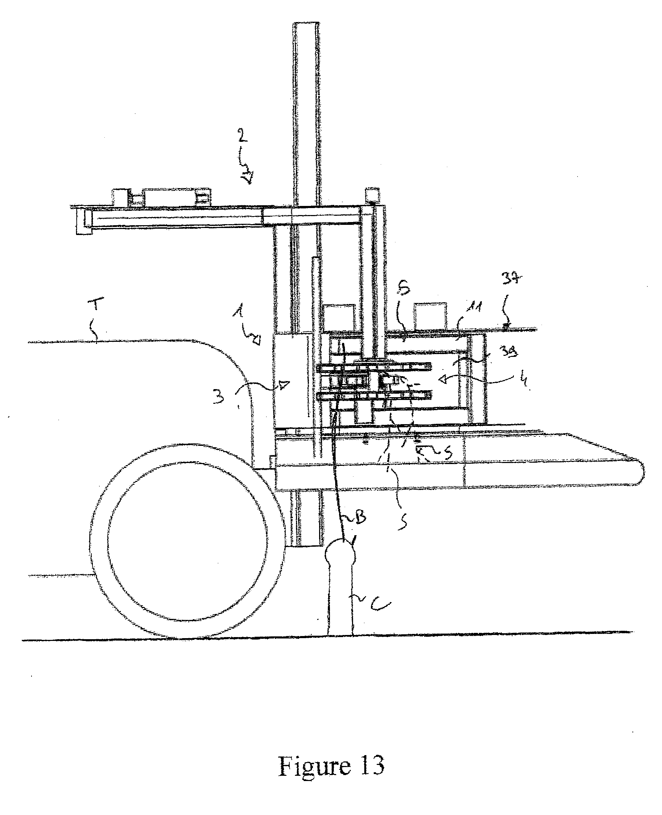

Les sarments taillés S sont ainsi décrochés par l'action des pneumatiques 39 et sont évacués de l'autre côté de la machine, comme représenté sur les Figures 12 et 13 .

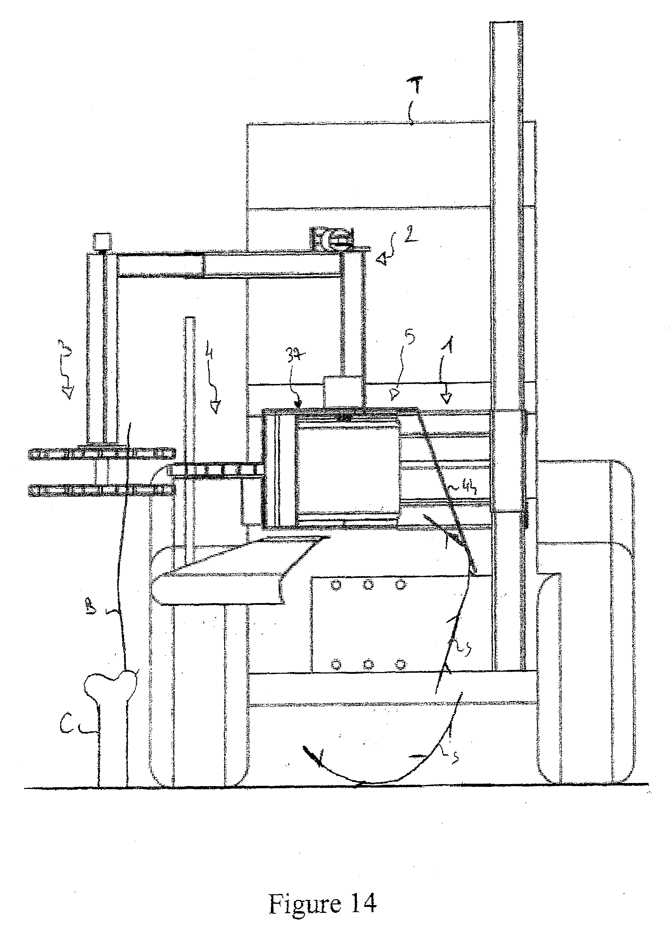

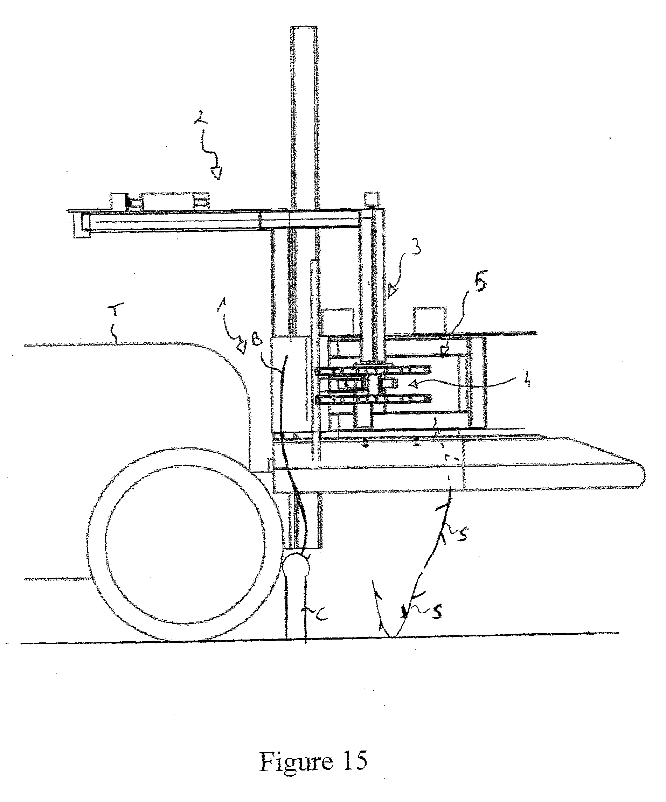

On peut notamment y voir que les sarments taillés S décrochés sont guidés vers le bas par la tôle inclinée 44, de façon à tomber au sol entre les roues du tracteur T, pour pouvoir ensuite être broyés par le broyeur, comme représenté sur les Figures 14 et 15.

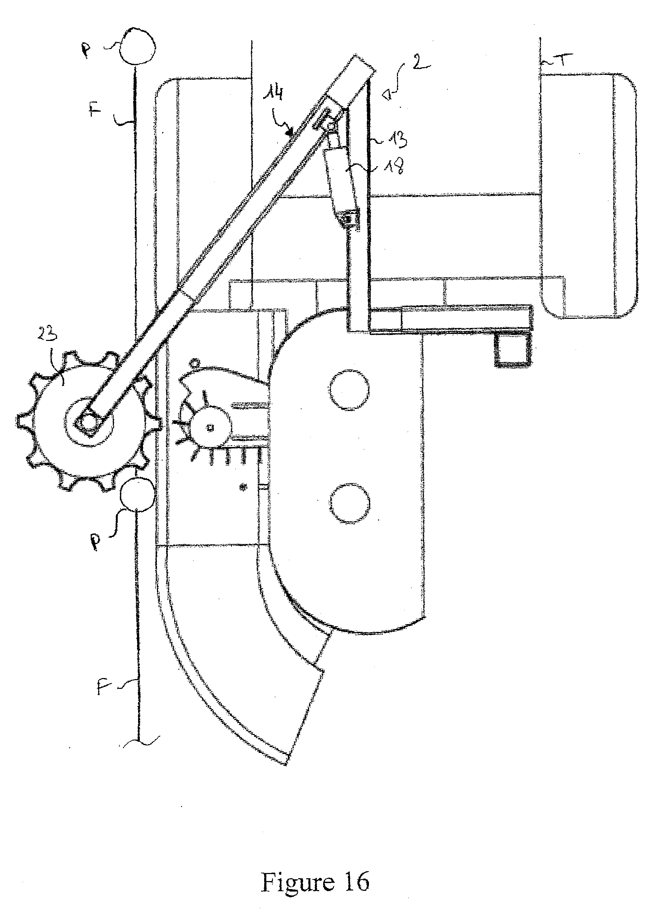

On vient de décrire les différentes étapes de décrochage des sarments taillés S d'un cep C. Comme indiqué ci-dessus, des piquets P sont plantés le long des rangs de vigne. On va donc décrire maintenant les différentes étapes de contournement de ces piquets P par les disques de saisie 23, avec référence aux Figures 16, 17 et 18.

Si l'on se réfère tout d'abord à la Figure 16, on peut voir que l'on y a représenté la machine juste avant que les disques de saisie 23 ne heurtent un piquet P alors qu'ils se trouvent encore dans leur position normale de fonctionnement. Dans cette position, la tige du vérin 18 est rentrée dans le corps de ce dernier et l'angle formé entre le premier bras 13 et le second bras 14 est minimal, le portique 2 étant alors dans sa position fermée.

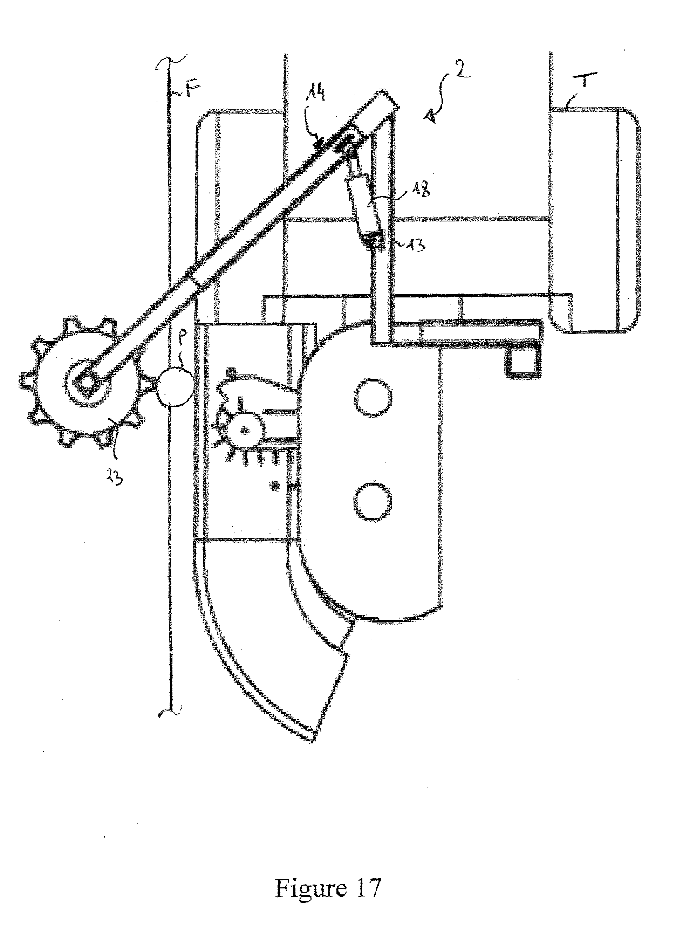

Si le tracteur T avance, la partie des disques de saisie 23 qui est tournée vers le tracteur T va venir heurter la partie du piquet P qui est tournée à l'opposé du tracteur T, déplaçant ainsi les disques de saisie 23 à l'opposé du tracteur T et écartant le second bras 14 vis-à-vis du premier bras 13, à l'encontre de l'action du vérin 18, ouvrant ainsi légèrement le portique 2, comme représenté sur la Figure 17.

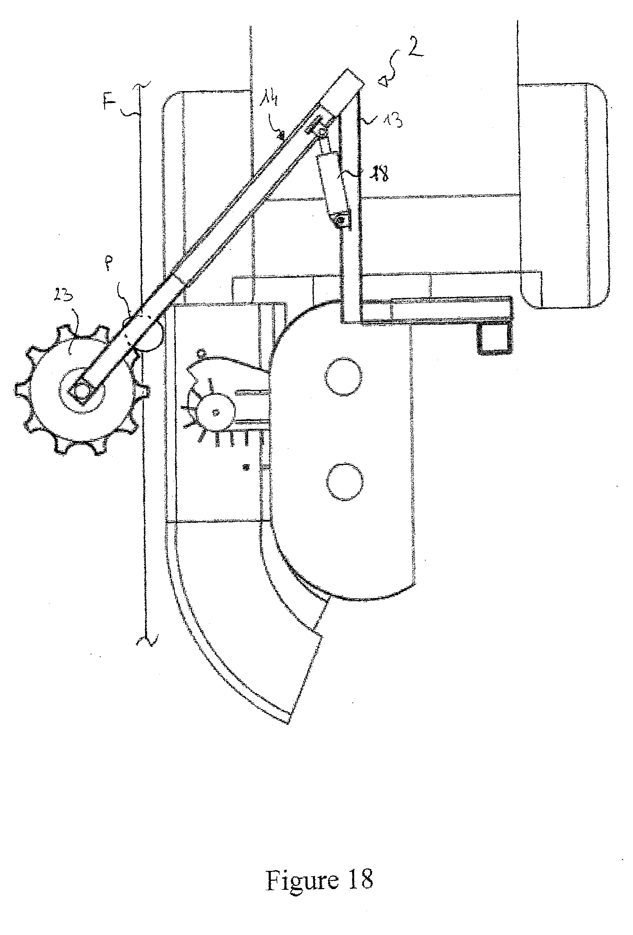

Si le tracteur T continue d'avancer, les disques de saisie 23 vont rouler sur l'extérieur du piquet P et être ramenés vers leur position normale de fonctionnement par l'action du vérin 18 qui tend à fermer le portique 2, comme représenté sur la Figure 18.

La machine selon la présente invention permet donc de décrocher automatiquement tous les sarments taillés S d'un rang de vigne, en laissant intacts les longs bois fructifères B sur les ceps C.

La structure du portique 2 autorise également la machine à traiter un rang de vigne au rang adjacent par un simple virage du tracteur T, ce qui est particulièrement commode et rapide.

En effet, les rangs de vigne sont souvent espacés les uns des autres d'une distance juste suffisante pour le passage d'un tracteur T.

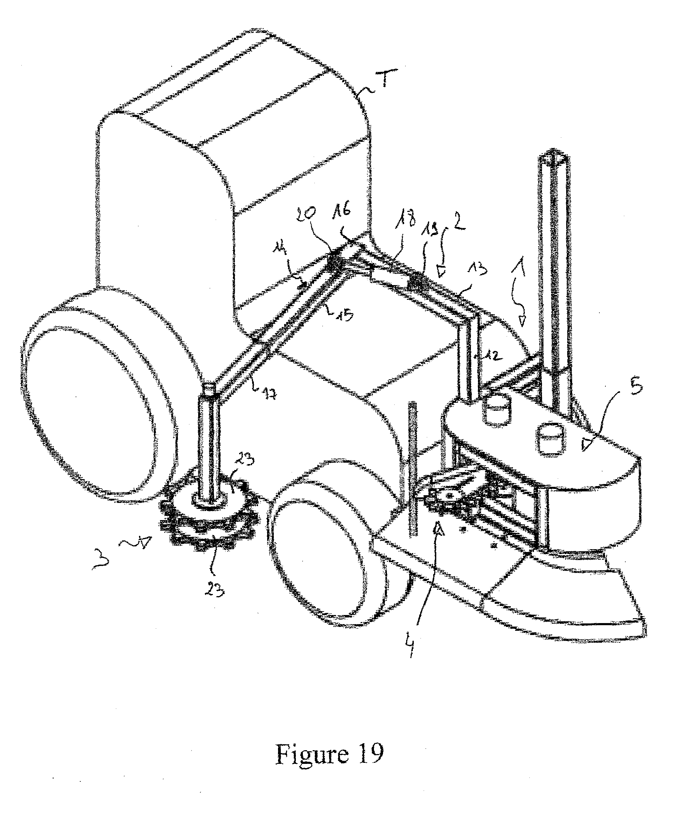

Ainsi, en entrée et en sortie de rang de vigne, on commande l'ouverture du portique 2 par le vérin 18, pour écarter au maximum le second bras 14 du premier bras 13, comme représenté sur la Figure 19.

Une fois dans cette position, on fait sortir le tracteur T du couloir défini par les deux rangs de vigne consécutifs dans lequel il se trouvait, et on le fait simultanément tourner vers la droite pour le faire rentrer, non pas dans le premier couloir adjacent, défini par le rang de vigne traité et le rang de vigne à traiter immédiatement adjacent sur la droite, mais dans le couloir suivant, à savoir celui défini par le rang de vigne à traiter et le rang de vigne adjacent à ce dernier. Lors de ce virage, les disques de saisie 23 restent dans le premier couloir et constitue un point de rotation fictif autour duquel le tracteur T tourne.

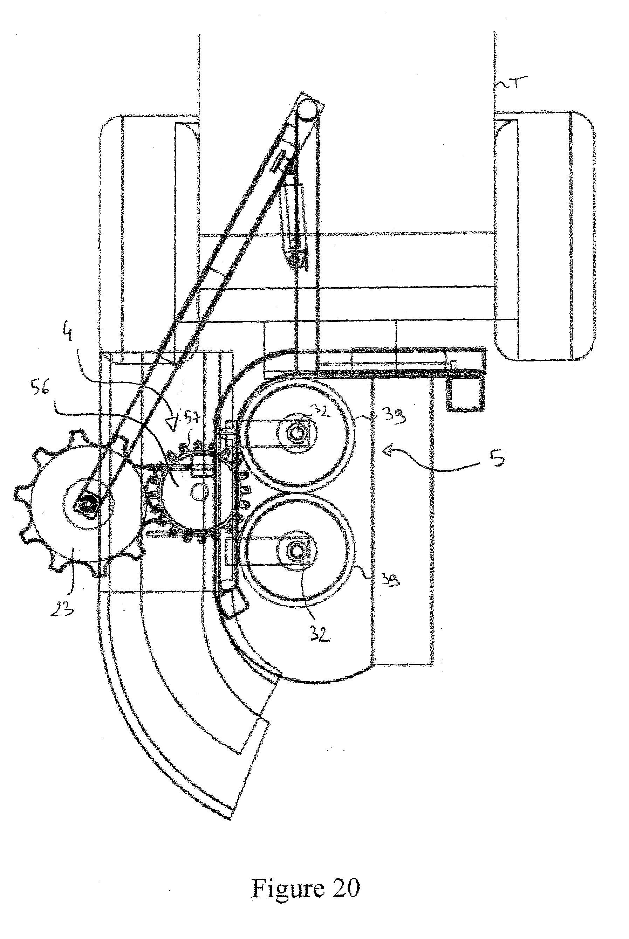

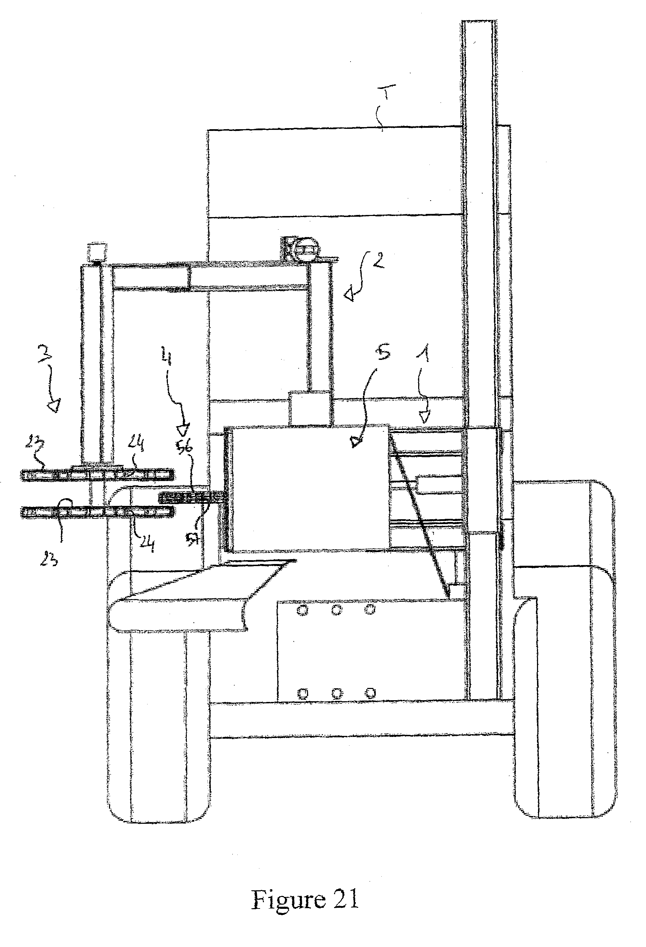

Si l'on se réfère maintenant aux Figures 20 et 21, on peut voir que l'on y a représenté une variante de la machine décrite ci-dessus.

Les différences résident dans le dispositif de transfert de sarments taillés 4 et le dispositif de décrochage 5.

Dans la variante représenté, le dispositif de transfert 4 comprend une roue dentée 56 dont les dents 57 sont espacées les unes des autres et dimensionnées de façon à former des espaces assurant la même fonction d'entraînement des sarments taillés S et de glissement des longs bois fructifères B que la courroie de transfert 28.

Dans le dispositif de décrochage 5, le premier arbre d'entraînement 32 porte un seul pneumatique 39, identique au pneumatique 39 porté par le second arbre d'entraînement 32.

Le diamètre de la roue dentée 56 est choisi pour que les projections des circonférences de la roue dentée 56 et des disques de saisie 23 sur un même plan horizontal se coupent, de la même manière que celle décrite ci-dessus pour la courroie de transfert 28, et pour que la roue dentée 26 soit à proximité des bandes de roulement des pneumatiques 39.

La roue dentée 56 est portée par un arbre et des paliers et entraînée en rotation par un moteur hydraulique.

Est également prévu un guide se présentant sous la forme d'un ensemble de doigts, et servant à guider les sarments taillés S lorsqu'ils sont introduits à l'intérieur du capot de protection 37.

Le fonctionnement de la machine selon cette variante est identique à celui décrit ci-dessus, les sarments taillés S et les longs bois fructifères B étant tout d'abord saisis par les disques de saisie 23, puis transférés à la roue dentée 56 qui introduit les sarments taillés S à l'intérieur du capot de protection 37 mais laisse glisser les longs bois fructifères B, où les sarments taillés S sont capturés et décrochés du fil de palissage F par les pneumatiques 39, puis éjectés hors de la machine pour être broyés par le broyeur.

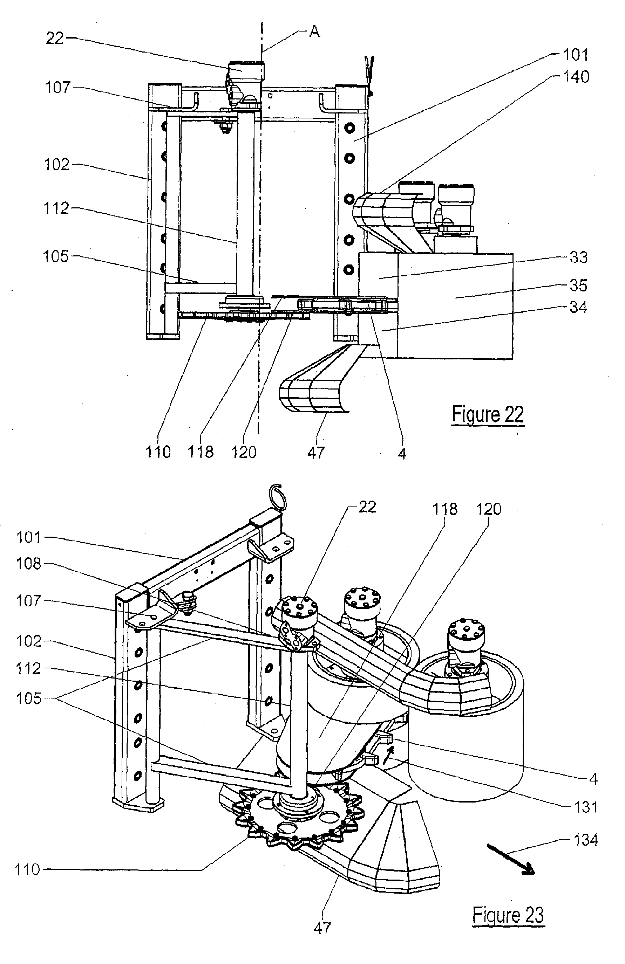

Une deuxième variante de la machine selon l'invention va maintenant être décrite en se référant aux Figures 22 à 24. Dans ces Figures, seulement la partie modifiée est montrée.

Au lieu des bras 13, 14, un portique rigide 101 est monté à côté du tracteur. Lorsque le tracteur avance, le rang des vignes passe par le portique 101, approximativement et de préférence dans l'axe A, entre un disque de saisi 110 et le dispositif de transfert 4. Un cadre pivotant 105 est relié au bras vertical le plus distant 102, à savoir celui le plus éloigné du tracteur. Entre le portique 101 et le cadre 105 s'étend un vérin dont seulement les dispositifs de fixation pivotable 107, 108 sont montrés.

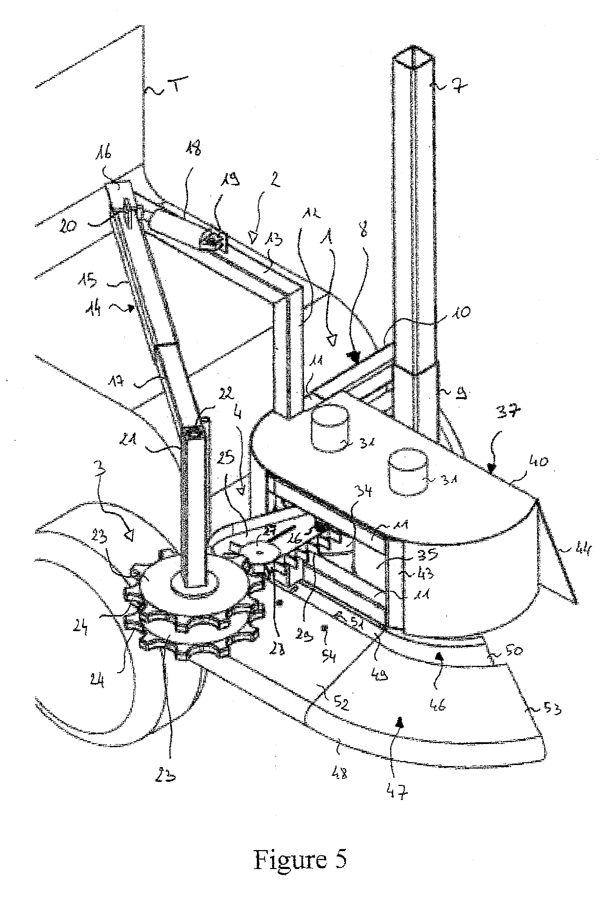

En analogie avec le vérin 18 (Fig. 5), ce vérin soumet une pression ajustable pour :
- maintenir le disque de saisie 110 entre les fils de palissage F (cf. Fig. 1) de façon à pousser les sarments hors desdits fils de palissage en direction du dispositif de transfert 4;
- permettre au disque 110 de contourner le piquet comme expliqué plus haut.

Dans la poutre verticale 112 distale du cadre 105, à l'extrémité supérieure de l'arbre d'entraînement du disque de saisie 110 est relié au moteur 22.

Remarque étant fait qu'en comparaison avec les exemples précédents, cette combinaison d'une portique et d'un cadre pivotant peut facilement être adapté à un montage à droite du tracteur (dessiné) ou à gauche de celui-ci. Selon cette variante, il n'y a qu'un seul disque de saisie 110. Ce dernier présente une denture périphérique particulière, semblable à celle d'un engrenage. Les flancs 116 des dents sont légèrement bombés, les sommets 117 sont arrondis. L'épaisseur des dents est relativement importante; selon l'exemple, elle est d'environ 15 mm. Ce profil présente l'avantage de combiner une certaine agressivité juste nécessaire et suffisante pour assurer une bonne saisie des sarments et permet au disque 110 de contourner les piquets sans les endommager. Au-dessus du disque de saisie 110 et s'étendant partiellement radialement à l'intérieur dudit disque, est agencé un dispositif de transfert 4 flanqué par des plaques supérieure 118 et inférieure 120. Ces plaques 118, 120 empêchent les sarments amenés par le disque de saisie 110 de se faufiler entre la chaîne 122 et les roues dentées 127, 129.

Le dispositif de transfert comporte des éléments mobiles consistant essentiellement en une chaîne 122 pourvue des griffes 123, une poulie dentée 127 et une roue dentée à chaîne 129. Les griffes 123, vues de dessus, ont une forme ressemblant à une dent: ; leur profil frontal est orienté essentiellement perpendiculairement à la chaîne 122 tandis que leur profil arrière est de forme plutôt polygonale ou arrondi.

La chaîne 122 est guidée par la poulie dentée 127 logée entre les deux plaques de protections 118, 120 et entraînée par la roue dentée d'entraînement arrière 129.

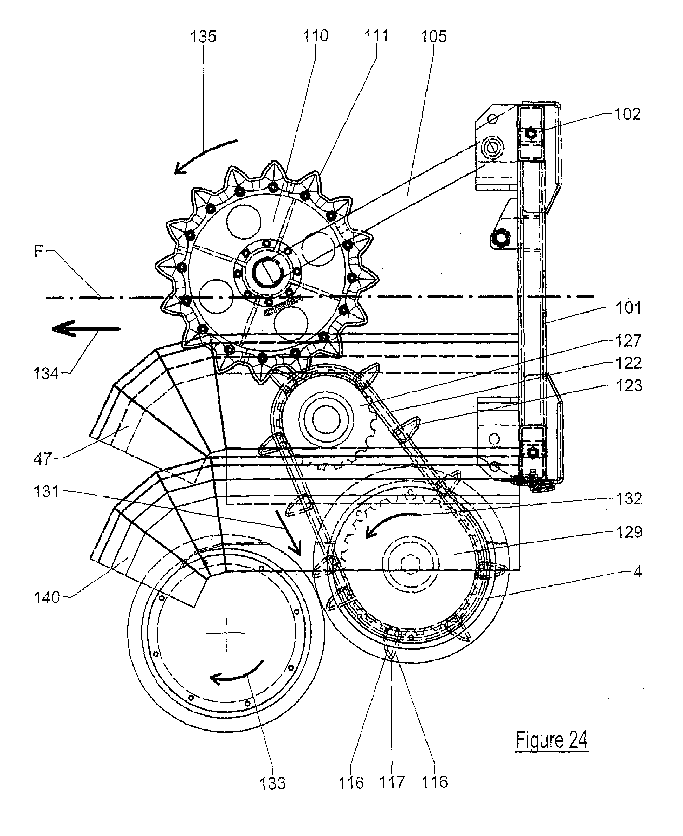

A l'inverse des variantes précédentes, la roue dentée 129 est agencée par rapport au sens d'avancement. Par cet agencement, en comparaison avec les variantes décrites plus haut, les sarments sont tirés au-delà de la zone de contact de la paire de roues garnies 33, 34 avec la roue 35. L'entraînement de la chaîne 122 est simplifié, la roue dentée 129 étant solidaire de l'arbre commun des roues 33, 34 (cf. Fig. 24). Evidemment, la chaîne cinématique de tous ces éléments mobiles (roues 34, 35 (flèche 132), roue 33 (flèche 133), chaîne 122 (flèche 131)) sont synchrones. En particulier, les valeurs absolues des composantes tangentielles des vitesses des roues 33, 34 et 35, inverses l'une de l'autre, sont identiques, réglables et ajustables en fonction de la densité et la longueur des sarments.

Finalement, cette variante est complétée par au moins une tôle de guidage supérieure 140 pour améliorer l'effet entonnoir de la tôle de guidage inférieure 47.

De manière différente, en phase de travail, la vitesse de rotation du disque de saisie 110 (flèche 135) est maintenue égale à celle du tracteur (flèche 134) pour que, principalement, les forces exercées par le disque 110 sur les piquets soient réduites à un minimum lors de leur contournement.

De préférence, les roues garnies 33, 34, 35 présentent chacune une forme cylindrique similaire à des tambours.

Comme variante, la chaîne 122 peut être remplacée par une courroie crantée 28, 29, la poulie dentée 127 et la roue dentée 129 étant alors crantées pour assurer l'entrainement d'une telle courroie 28.

Il est bien entendu que les modes de réalisation qui ont été décrits ci-dessus sont donnés à titre indicatif et non limitatif et que des modifications peuvent être apportées sans que l'on s'écarte pour autant du cadre de la présente invention tel que défini par les revendications suivantes.

## Revendications

1. Machine a tirer automatiquement les sarments de vigne taillés (S) accrochés par des vrilles à un fil de palissage (F) reliant des piquets verticaux (P) installés le long d'un rang de ceps de vigne (C) à partir de chacun desquels s'étend un long bois fructifère (B), comprenant
- un dispositif (3; 110) de saisie des sarments comprenant un élément rotatif autour d'un arbre vertical et s'étendant dans un plan horizontal et présentant sur sa surface circonférentielle des échancrures (24) de saisie et d'entraînement des sarments taillés (S) ;
- un dispositif de transfert (4) comprenant un élément de transfert (28; 56; 122) ayant des échancrures de transfert (29; 123), la projection de la trajectoire des échancrures sur le plan horizontal coupant la projection de la trajectoire des échancrures de saisie à une entrée du dispositif de transfert, rendant le dispositif de transfert capable d'enlever les sarments des échancrures de saisie et de les entraîner vers une sortie du dispositif de transfert;
- un dispositif de décrochage (5) des sarments taillés (5) comprenant des moyens de capture (33, 34, 35) des sarments taillés capable d'exercer une force de traction généralement supérieure à la résistance des vrilles accrochant les sarments taillés (S) aux fils de palissage, la trajectoire des échancrures du dispositif de transfert s'étendant dans un espace allant du plus près des moyens de décrochage au dépassement de ces derniers de sorte que les moyens de capture sont capables d'attraper un sarment entraîné par le dispositif de transfert,
où les échancrures sont conformées de telle sorte que le bois fructifère (B) non-taillé soit non arraché du cep et ménagé.

2. Machine selon la revendication 1, **caractérisée en ce que** l'élément rotatif comprend au moins un disque de saisie (23; 110) comportant périphériquement des échancrures (24; 111) délimitées par des dents capables d'entraîner des sarments taillés (S).

3. Machine selon la revendication 2, **caractérisée en ce que** le disque de saisie (23) est agencé de façon à lui permettre un mouvement sous l'effet d'un élément de rappel, le rendant capable de contourner un piquet (P).

4. Machine selon une des revendications 1 à 3, **caractérisée en ce que** le dispositif de transfert (4) comprend:
- au moins une roue (56) comportant des échancrures (57) à sa périphérie, la roue étant entraînée en sens opposé au disque de saisie (23) audit lieu de coupe des trajectoires; ou
- un moyen de transmission de mouvement (28; 122) pourvu de griffes (29; 123), le moyen de transmission de mouvement étant entraîné en sens opposé au disque de saisie (23) audit lieu de coupe des trajectoires.

5. Machine selon la revendication 4, **caractérisée en ce que** le dispositif de décrochage comprend deux corps rotatifs (33, 34; 35) en contact l'un à l'autre, cette zone de contact constituant la partie capable d'exercer la force de traction, les corps rotatifs étant entraînés en rotation de manière que leurs surfaces dans la zone de contact avancent à la même vitesse et dans la même direction, et que dans l'un des deux corps rotatifs est intégrée une roue d'entraînement (129) autour de laquelle s'étend le moyen de transmission de mouvement du dispositif de transfert (122) afin de l'entraîner.

6. Machine selon une des revendications 4 à 5, **caractérisée en ce que** le moyen de transmission de mouvement du dispositif de transfert est une chaîne (122) portant des griffes (123).

7. Machine selon une des revendications 1 à 6, **caractérisée en ce qu'**au-dessus et/ou au-dessous du dispositif de transfert (4), un dispositif de guidage (47; 47, 140) formant une surface inclinée est prévu afin de réaliser un effet entonnoir pour les sarments (S) entraînés par le dispositif de transfert.

8. Machine selon l'une des revendications 1 à 7 destinée à être attelée à l'avant d'un véhicule agricole (T) et étant **caractérisée par le fait qu'**elle comprend :
• un châssis de support (1) ayant des moyens pour sa fixation au tracteur (T) et s'étendant dans des directions longitudinale et transversale qui correspondent, une fois le châssis de support (1) fixé au véhicule agricole (T), respectivement à la direction suivant laquelle s'étend le rang de ceps (C) et à la direction transversale à celle-ci ;
• un portique (2) fixé au châssis de support (1) et comprenant un ensemble bras qui est monté pivotant par rapport au châssis de support (1) et à une région d'extrémité en porte-à-faux de ce dernier, dans la direction transversale ;
• un dispositif de saisie {3} des sarments taillés (S) et des longs bois fructifères (B), comprenant :
- un arbre d'entraînement vertical relié à rotation à la région d'extrémité en porte-à-faux du portique (2),
- au moins un disque de saisie (23) solidaire de l'arbre d'entraînement et présentant sur sa surface circonférentielle des échancrures (24) de saisie et d'entraînement des sarments taillés (S) et des longs bois fructifères (B), et un moteur (22) relié à l'arbre d'entraînement et destiné à l'entraîner en rotation dans le sens ramenant vers le châssis de support (1) les sarments taillés (S) et les longs bois fructifères (B) saisis par le ou les disques de saisie (23) ;
- un dispositif de transfert (4) des sarments taillés (S), comprenant :
- un élément de transfert (28 ; 56) relié à rotation au châssis de support (1) et présentant sur son extérieur des échancrures de saisie et d'entraînement des sarments taillés (S) préalablement saisis par le ou les disques de saisie (23), la projection de la trajectoire des échancrures de l'élément de transfert (28 ; 56) sur un plan horizontal coupant, à l'entrée du dispositif de transfert (4), la projection de la trajectoire des échancrures (24) du ou des disques de saisie (23) sur ce même plan horizontal, et des moyens d'entraînement en rotation de l'élément de transfert (28 ; 56), agencés pour le faire tourner dans le sens de rotation opposé à celui des disques de saisie (23) ; et
• un dispositif de décrochage (5) des sarments taillés (S) disposé en sortie du dispositif de transfert (4) et comprenant des moyens de capture des sarments taillés (S) et de traction de ces derniers dans la direction opposée au dispositif de transfert (4) et avec une force de traction supérieure à la résistance des vrilles accrochant les sarments taillés (4) au fil de palissage (F).

9. Machine selon l'une des revendications 1 à 8, **caractérisée par le fait que** le dispositif de saisie (3) comprend deux disques de saisie (23) écartés l'un de l'autre, une partie de l'élément de transfert (4) s'étendant entre les deux disques de saisie (23).

10. Machine selon l'une des revendications 1 à 9, **caractérisée par le fait que** l'élément de transfert (28) est formé par une courroie (28) présentant sur sa surface extérieure des saillies (29) réparties suivant la longueur de la courroie {28} et écartées les unes des autres de telle sorte que l'espace entre deux saillies {29} successives constitue une échancrure de saisie et d'entraînement des sarments taillés (S).

11. Machine selon l'une des revendications 1 à 9, **caractérisée par le fait que** l'élément de transfert (56) est formé par une roue à denture extérieure (56), les dents étant dimensîonnées de telle sorte que l'espace entre deux dents (29) successives constitue une échancrure de saisie et d'entraînement des sarments taillés (S).

12. Machine selon l'une des revendications 1 à 11, **caractérisée par le fait que** les moyens de capture et de traction des sarments taillés (S) comprennent :
- deux ensembles roues disposés en sortie du dispositif de transfert (4) et portés à rotation par le châssis de support (1) de telle sorte que leurs axes de rotation sont parallèles, et de préférence verticaux, et que les surfaces circonférentielles des deux ensembles roues sont comprimées les unes contre les autres, et
- des moyens d'entraînement en rotation des ensembles roues, agencés pour faire tourner ces derniers dans des sens qui sont contraires et tels que les ensembles de roue tirent les sarments taillés (S) capturés entre les surfaces circonférentielles des deux ensembles roues à l'opposée du dispositif de transfert (4).

13. Machine selon la revendication 12, dans laquelle les axes de rotation des ensembles roues sont verticaux et les ensembles roues sont disposés dans la direction longitudinale du châssis de support (1), **caractérisée par le fait que** l'ensemble roue le plus proche du moyen de fixation du châssis de support (1) au véhicule agricole (T) comprend deux roues (33, 34} écartées l'une de l'autre et dont les surfaces circonférentielles sont comprimées contre celle de l'autre ensemble roue, l'élément de transfert (28 ; 56) étant disposé par rapport au châssis de support (1) de telle sorte que l'élément de transfert (28 ; 56} s'étend dans l'espace entre les deux roues (33. 34) et que les sarments taillés (S) sortent des échancrures de l'élément de transfert (28 ; 56) dans le plan généré par la direction transversale du châssis de support (1) et la ligne de contact entre les deux ensembles roues.

14. Machine selon l'une des revendications 12 ou 13, **caractérisée par le fait que** la surface circonférentielle des ensembles roues, le cas échéant des roues, est structurée.

15. Machine selon l'une des revendications 1 à 14, **caractérisée par le fait que** le portique (2) comprend un mât de portique (12) vertical et fixé au châssis de support (1), un premier bras (13) fixé d'équerre en partie haute du mât de portique (12) et s'étendant dans la direction longitudinale du châssis de support (1), à l'opposé du dispositif de transfert (4) et du dispositif de décrochage (5), un second bras (14) relié à pivotement au premier bras (13) et s'étendant en porte-à-faux du châssis de support (1), et un moyen de commande du pivotement du second bras (14) par rapport au premier bras (13), le dispositif de saisie (3) étant relié à la région d'extrémité du second bras en porte-à-faux du châssis de support (1).

16. Machine selon l'une des revendications 1 à 15, **caractérisée par le fait que** l'ensemble bras du portique (2), le cas échéant le second bras (14), est télescopique, de façon à permettre le réglage de la distance sur laquelle son extrémité est en porte-à-faux du châssis de support (1).

17. Machine selon l'une des revendications 1 à 16, **caractérisée par le fait que** le châssis de support (1) comprend une platine (6) de fixation au véhicule agricole (T), un mât (7) vertical fixé à la platine (6) et un cadre mobile (8) comprenant un coulisseau vertical (9) monté verticalement mobile sur le mât (7) et un moyen de commande du déplacement du coulisseau vertical (9), le portique (2) étant fixé au cadre mobile (8).

18. Machine selon la revendication 17, **caractérisée par le fait que** le cadre mobile (8) comprend en outre au moins une poutre formant glissière (10) fixée horizontalement au coulisseau vertical (9) et dans la direction transversale du châssis de support (1), au moins un coulisseau horizontal (11) reçu mobile dans la poutre formant glissière (11) et un moyen de commande du déplacement du coulisseau horizontal (11), le portique (2), le dispositif de transfert (4) et le dispositif de décrochage (5) étant fixé au coulisseau horizontal (11).

19. Machine selon l'une des revendications 1 à 18, **caractérisée par le fait qu'**une tôle de guidage (47) est fixée au châssis de support (1), le cas échéant au ou à un coulisseau horizontal (11), et s'étend vers le bas et l'opposé du châssis de support (1), la tôle de guidage (47) servant de surface d'appui des parties basses des sarments taillés (S) lorsqu'ils sont entraînés par les disques de saisie (23) et l'élément de transfert (28 ; 56), pour les faire fléchir vers le haut afin de les libérer d'un fil de palissage (F) s'étendant en partie basse des piquets (P).

20. Véhicule agricole équipé d'une machine telle que définie à l'une des revendications 1 à 19.

21. Véhicule agricole selon la revendication 20, **caractérisé par le fait qu'**il est équipé d'un broyeur positionné pour broyer les sarments taillés se trouvant au sol.

## Patentansprüche

1. Maschine zum automatischen Abziehen von abgeschnittenen Rebentrieben (S), die mit Ranken an einem Spalierdraht (F) hängen, der senkrechte Pfähle (P) verbindet, die entlang einer Reihe von Rebstöcken (C) angeordnet sind, von welchen jeweils ein langes Fruchtholz (B) ausgeht, enthaltend:
- eine Vorrichtung (3; 110) zum Ergreifen der Triebe mit einem um eine senkrechte Welle drehbaren Teil, das sich in einer waagrechten Ebene erstreckt und an seiner Umfangsfläche Aussparungen (24) zum Ergreifen und Mitnehmen der abgeschnittenen Triebe (S) aufweist;
- eine Transfervorrichtung (4) mit einem Transferelement (28; 56; 122) mit Transferaussparungen (29; 123), wobei die Projektion der Umlaufbahn der Aussparungen auf die waagrechte Ebene die Projektion der Umlaufbahn der Greifaussparungen bei einem Eingang der Transfervorrichtung schneidet und die Vorrichtung somit in der Lage ist, die Triebe aus den Greifaussparungen zu entnehmen und sie einem Ausgang der Transfervorrichtung zuzuführen;
- eine Vorrichtung (5) zum Abziehen der abgeschnittenen Triebe (S), mit Mitteln (33, 34, 35) zum Erfassen der abgeschnittenen Triebe, die eine allgemein höhere Zugkraft ausüben können als der Widerstand der Ranken, die die abgeschnittenen Triebe (S) an den Spalierdrähten festhalten, wobei sich die Umlaufbahn der Aussparungen der Transfervorrichtung in einem Raum erstreckt, der von der nächsten Nähe der Abziehmittel bis über diese hinaus reicht, so dass die Fassmittel einen von der Transfervorrichtung mitgenommenen Trieb fassen können,
wobei die Aussparungen so ausgebildet sind, dass das unbeschnittene Fruchtholz (B) geschont und nicht vom Rebstock abgerissen wird.

2. Maschine nach Anspruch 1, **dadurch gekennzeichnet, dass** der drehbare Teil mindestens eine Greifscheibe (23; 110) mit am Umfang angeordneten Aussparungen (24; 111) aufweist, die von Zähnen begrenzt sind, die die abgeschnittenen Triebe (S) mitnehmen können.

3. Maschine nach Anspruch 2, **dadurch gekennzeichnet, dass** die Greifscheibe (23) derart angeordnet ist, dass sie unter der Wirkung eines Rückstellelements bewegbar ist, um einem Pfahl (P) ausweichen zu können.

4. Maschine nach einem der Ansprüche 1 bis 3, **dadurch gekennzeichnet, dass** die Transfervorrichtung (4) enthält:
- mindestens ein Rad (56) mit am Umfang angeordneten Aussparungen (57), wobei das Rad am genannten Schnittpunkt der Umlaufbahnen im Gegensinn zur Greifscheibe (23) angetrieben wird; oder
- ein Bewegungsübertragungsmittel (28; 122) mit Klauen (29; 123), wobei das Bewegungsübertragungsmittel am genannten Schnittpunkt der Umlaufbahnen im Gegensinn zur Greifscheibe (23) angetrieben wird.

5. Maschine nach Anspruch 4, **dadurch gekennzeichnet, dass** die Abhängevorrichtung zwei miteinander in Kontakt stehende drehende Körper (33, 34; 35) aufweist und dieser Kontaktbereich den die Kraft ausübenden Teil bildet, wobei die drehenden Körper derart drehend angetrieben werden, dass sich ihre Oberflächen im Kontaktbereich mit der gleichen Geschwindigkeit und in der gleichen Richtung vorwärts bewegen, und dass im einen der beiden drehenden Körper ein Antriebsrad (129) eingebaut ist, um welches sich das Mittel zur Bewegungsübertragung der Transfervorrichtung (122) erstreckt, um diese anzutreiben.

6. Maschine nach einem der Ansprüche 4 bis 5, **dadurch gekennzeichnet, dass** das Mittel zur Bewegungsübertragung der Transfervorrichtung eine Kette (122) mit Klauen (123) ist.

7. Maschine nach einem der Ansprüche 1 bis 6, **dadurch gekennzeichnet, dass** über und/oder unter der Transfervorrichtung (4) eine Führungsvorrichtung (47; 47, 140) vorgesehen ist, die eine geneigte Fläche bildet, um eine Trichterwirkung für die von der Transfervorrichtung mitgenommenen Triebe (S) zu erzielen.

8. Maschine nach einem der Ansprüche 1 bis 7 zum Ankuppeln an der Vorderseite eines landwirtschaftlichen Fahrzeugs (T), **dadurch gekennzeichnet, dass** sie aufweist:
• ein Traggestell (1) mit Mitteln zu dessen Befestigung am Traktor (T), das sich in Längs- und Querrichtung erstreckt, die der Richtung, in der sich die Reihe von Rebstöcken (C) erstreckt, beziehungsweise der Richtung quer zu derselben entsprechen, wenn das Traggestell (1) am landwirtschaftlichen Fahrzeug befestigt ist,
• einen am Traggestell (1) befestigten Ausleger (2) mit einer Armanordnung, die gegenüber dem Traggestell (1) schwenkbar und an einem in Querrichtung überhängenden Endbereich montiert ist;
• eine Vorrichtung zum Ergreifen {3} der abgeschnittenen Triebe (S) und der langen Fruchthölzer (B) mit:
- einer drehbar mit dem überhängenden Endbereich des Auslegers (2) verbundenen Antriebswelle,
- mindestens einer mit der Antriebswelle fest verbundenen Greifscheibe (23), deren Umfangsfläche Aussparungen (24) zum Ergreifen und Mitnehmen der abgeschnittenen Triebe (S) und der langen Fruchthölzer (B) aufweist, sowie einem mit der Antriebswelle verbundenen Motor (22) zu deren drehendem Antrieb in einer Richtung, in der die von der oder den Greifscheibe(n) (23) erfassten abgeschnittenen Triebe (S) und langen Fruchthölzer (B) zum Traggestell (1) befördert werden;
- einer Transfervorrichtung (4) für die abgeschnittenen Triebe (S) mit:
- einem drehbar mit dem Traggestell (1) verbundenen Transferelement (28; 56), das auf der Aussenseite Aussparungen zum Ergreifen und Mitnehmen von abgeschnittenen Trieben (S) aufweist, die zuvor von der oder den Greifscheibe(n) (23) erfasst worden sind, wobei die Projektion der Umlaufbahn der Aussparungen des Transferelements (28; 56) auf eine waagrechte Ebene die Projektion der Umlaufbahn der Aussparungen (24) der Greifscheibe(n) (23) beim Eingang der Transfervorrichtung (4) in derselben waagrechten Ebene schneidet, und mit Mitteln zum drehenden Antrieb des Transferelements (28; 56), die ausgebildet sind, um dieses entgegen der Drehrichtung der Greifscheiben (23) anzutreiben; und
• eine am Ausgang der Transfervorrichtung (4) angeordnete Vorrichtung zum Abziehen (5) der abgeschnittenen Triebe (S), die Mittel zum Erfassen der abgeschnittenen Triebe (S) und zum Ausüben einer Zugkraft auf dieselben in Gegenrichtung zur Transfervorrichtung (4) aufweist, die höher ist als der Widerstand der Ranken, mit denen die abgeschnittenen Triebe (4) am Spalierdraht (F) hängen.

9. Maschine nach einem der Ansprüche 1 bis 8, **dadurch gekennzeichnet, dass** die Greifvorrichtung (3) zwei voneinander beabstandete Greifscheiben (23) aufweist, wobei sich ein Teil des Transferelements (4) zwischen die beiden Greifscheiben (23) erstreckt.

10. Maschine nach einem der Ansprüche 1 bis 9, **dadurch gekennzeichnet, dass** das Transferelement (28) aus einem Riemen (28) besteht, der auf seiner Aussenfläche Vorsprünge (29) aufweist, die über die Länge des Riemens {28} verteilt und derart voneinander beabstandet sind, dass der Zwischenraum zwischen zwei aufeinander folgenden Vorsprüngen {29} eine Aussparung zum Ergreifen und Mitnehmen der abgeschnittenen Triebe (S) bildet.

11. Maschine nach einem der Ansprüche 1 bis 9, **dadurch gekennzeichnet, dass** das Transferelement (56) aus einem Rad (56) mit Aussenverzahnung besteht, wobei die Zähne derart dimensioniert sind, dass der Zwischenraum zwischen zwei aufeinanderfolgenden Zähnen eine Aussparung zum Ergreifen und Mitnehmen der abgeschnittenen Triebe (S) bildet.

12. Maschine nach einem der Ansprüche 1 bis 11, **dadurch gekennzeichnet, dass** die Mittel zum Erfassen und Abziehen der abgeschnittenen Triebe (S) aufweisen:
- zwei am Ausgang der Transfervorrichtung (4) angeordnete Radanordnungen, die drehbar vom Traggestell (1) derart getragen werden, dass ihre Drehachsen parallel zueinander und vorzugsweise senkrecht stehen und dass die Umfangsflächen der beiden Radanordnungen gegeneinander gedrückt werden, und
- Mittel zum drehenden Antrieb der Radanordnungen, die ausgebildet sind, um dieselben in entgegengesetzten Richtungen in Drehung zu versetzen derart, dass die Radanordnungen die zwischen den Umfangsflächen der beiden Radanordnungen erfassten abgeschnittenen Triebe (S) in die zur Transfervorrichtung (4) entgegengesetzte Richtung ziehen.

13. Maschine nach Anspruch 12, in der die Drehachsen der Radanordnungen senkrecht stehen und die Radanordnungen in Längsrichtung des Traggestells (1) angeordnet sind, **dadurch gekennzeichnet, dass** die am nächsten beim Mittel zur Befestigung des Traggestells (1) am landwirtschaftlichen Fahrzeug (T) angeordnete Radanordnung zwei voneinander beabstandete Räder (33, 34} aufweist, deren Umfangsflächen gegen diejenige der anderen Radanordnung gedrückt werden, wobei das Transferelement (28; 56) in Bezug auf das Traggestell (1) derart angeordnet ist, dass das Transferelement (28; 56} in den Zwischenraum zwischen den beiden Rädern (33. 34) hineinragt und die abgeschnittenen Triebe (S) in der von der Querrichtung des Traggestells (1) und der Berührungslinie zwischen den beiden Radanordnungen gebildeten Ebene aus den Aussparungen des Transferelements (28; 56) austreten.

14. Maschine nach einem der Ansprüche 12 bis 13, **dadurch gekennzeichnet, dass** die Umfangsfläche der Radanordnungen, gegebenenfalls der Räder, strukturiert ist.

15. Maschine nach einem der Ansprüche 1 bis 14, **dadurch gekennzeichnet, dass** der Ausleger (2) eine am Traggestell (1) befestigte senkrechte Auslegersäule (12) aufweist, einen rechtwinklig oben an der Auslegersäule (12) befestigten ersten Arm (13), der sich gegenüber der Transfervorrichtung (4) und der Abziehvorrichtung (5) in Längsrichtung des Traggestells (1) erstreckt, einen schwenkbar mit dem ersten Arm (13) verbundenen zweiten Arm (14), der sich vom Traggestell (1) weg überhängend erstreckt, sowie ein Mittel zum Verschwenken des zweiten Arms (14) gegenüber dem ersten Arm (13), wobei die Greifvorrichtung (3) über das Traggestell (1) überhängend mit dem Endbereich des zweiten Arms verbunden ist.

16. Maschine nach einem der Ansprüche 1 bis 15, **dadurch gekennzeichnet, dass** die Armanordnung des Auslegers (2) bzw. der zweite Arm (14) ausziehbar ist, um den Abstand des Überhangs seines Endes vom Traggestell (1) einstellen zu können.

17. Maschine nach einem der Ansprüche 1 bis 16, **dadurch gekennzeichnet, dass** das Traggestell (1) eine Platte (6) für dessen Befestigung am landwirtschaftlichen Fahrzeug (T) aufweist, eine an der Platte (6) befestigte senkrechte Säule (7), einen beweglichen Rahmen (8} mit einem senkrecht auf der Säule (7) verschiebbaren senkrechten Schieber (9) und einem Betätigungsmittel zur Verschiebung des senkrechten Schiebers (9), wobei der Ausleger (2) am beweglichen Rahmen (8) befestigt ist.

18. Maschine nach Anspruch 17, **dadurch gekennzeichnet, dass** der bewegliche Rahmen (8) weiter mindestens einen waagrecht am senkrechten Schieber (9) und in Querrichtung des Traggestells (1) befestigten Balken (10) aufweist, der eine Gleitschiene bildet, sowie mindestens einen waagrechten Schieber (11), der beweglich im Balken, der eine Gleitschiene bildet, aufgenommen ist, und ein Betätigungsmittel zur Verschiebung des waagrechten Schiebers (11), wobei der Ausleger (2), die Transfervorrichtung (4) und die Abziehvorrichtung (5) am waagrechten Schieber (11) befestigt sind.

19. Maschine nach einem der Ansprüche 1 bis 18, **dadurch gekennzeichnet, dass** am Traggestell (1), gegebenenfalls am oder an einem waagrechten Schieber (11), ein Führungsblech (47) befestigt ist, das nach unten und in Gegenrichtung zum Traggestell (1) verläuft, wobei das Führungsblech (47) als Auflagefläche für die unteren Teile der abgeschnittenen Triebe (S) dient, wenn diese von den Greifscheiben (23) und vom Transferelement (28; 56) mitgenommen werden, um sie nach oben zu biegen und von einem im unteren Bereich der Pfähle (P) verlaufenden Spalierdraht (F) zu lösen.

20. Mit einer Maschine nach einem der Ansprüche 1 bis 19 ausgerüstetes landwirtschaftliches Fahrzeug.

21. Landwirtschaftliches Fahrzeug nach Anspruch 20, **dadurch gekennzeichnet, dass** es mit einem Häcksler ausgerüstet ist, der geeignet angeordnet ist, um die am Boden liegenden abgeschnittenen Triebe zu häckseln.

## Claims

1. Machine for automatically pulling out the cut vine branches (S) that are attached by their tendrils to a tying wire (F) that connects vertical posts (P) installed along a row of vine plants (C) from each of which a long fruit-bearing branch (B) extends, comprising:
- a device (3; 110) for gripping the branches including an element that rotates around a vertical shaft and extends in a horizontal plane and the circumferential surface of which is provided with notches (24) for gripping and dragging the cut branches (S);
- a transfer device (4) including a transfer element (28; 56; 122) having transfer notches (29; 123), the projection of the trajectory of the notches onto the horizontal plane intersecting the projection of the trajectory of the gripping notches at an entry of the transfer device, thereby enabling the transfer device to remove the branches from the gripping notches and to drag them along to an exit of the transfer device;
- a device (5) for detaching the cut-off branches (S) including means (33, 34, 35) for capturing the cut branches able to exert a traction force that is generally higher than the resistance of the tendrils that attach the cut branches (S) to the tying wires, the trajectory of the notches of the transfer device extending in a space that extends from the closest proximity to the detaching means beyond the latter so as to enable the capturing means to catch a branch dragged along by the transfer device,
wherein the notches are formed such that the unpruned fruit-bearing branch (B) is not torn off the vine and is preserved.

2. Machine according to claim 1, **characterised in that** the rotary element comprises at least one gripping disk (23; 110) comprising peripheral notches (24; 111) delimited by teeth that are capable of entraining cut branches (S).

3. Machine according to claim 2, **characterised in that** the gripping disk (23) is arranged so as to be movable under the action of a return element, thereby allowing it to move around a post (P).

4. Machine according to one of claims 1 to 3, **characterised in that** the transfer device (4) includes:
- at least one wheel (56) comprising peripheral notches (57), the wheel being driven in the opposite direction of the gripping disk (23) at said point of intersection of the trajectories; or
- a movement transmission means (28; 122) provided with claws (29; 123), the movement transmission means being driven in the opposite direction of the gripping disk (23) at said point of intersection of the trajectories.

5. Machine according to claim 4, **characterised in that** the detaching device includes two rotary bodies (33; 34; 35) in contact with each other, this contact area forming the part that is capable of exerting the traction force, the rotary bodies being driven in rotation such that in the contact area their surfaces move at the same speed and in the same direction, and **in that** a driving wheel (129) is integrated in one of the two rotary bodies, around which the movement transmission means of the transfer device (122) extends in order to drive it.

6. Machine according to one of claims 4 to 5, **characterised in that** the movement transmission means of the transfer device is a chain (122) provided with claws (123).

7. Machine according to one of claims 1 to 6, **characterised in that** above and/or below the transfer device (4) a guiding device (47; 47, 140) is provided which forms an inclined surface in order to achieve a funnel effect for the branches (S) entrained by the transfer device.

8. Machine according to one of claims 1 to 7, intended for being coupled to the front of an agricultural vehicle (T) and **characterised in that** it comprises:
• a supporting frame (1) having means for fastening it to the tractor (T) and extending in longitudinal and transversal directions that correspond, once the supporting frame (1) is attached to the agricultural vehicle (T), to the direction along which the vine row (C) extends and to the transverse direction thereto, respectively;
• a gantry (2) fastened to the supporting frame (1) and including an arm assembly that is mounted so as to pivot about the supporting frame (1) and at an end region overhanging from the latter in the transversal direction;
• a device (3) for gripping the cut branches (S) and the long fruit-bearing branches (B), comprising:
- a vertical drive shaft that is rotatably connected to the overhanging end region of the gantry (2),
- at least one gripping disk (23) fixedly mounted to the drive shaft and provided on its circumferential surface with notches (24) for gripping and entraining cut branches (S) and long fruit-bearing branches (B), and a motor (22) connected to the drive shaft and intended to drive it in a rotation in the direction that moves the cut branches (S) and the long fruit-bearing branches (B) gripped by the gripping disk(s) (23) towards the supporting frame (1);
- a transfer device (4) for the cut-off branches (S), comprising:
- a transfer element (28; 56) rotatably connected to the supporting frame (1) and provided on its outside with notches for gripping and dragging the cut branches (S) previously gripped by the gripping disk(s) (23), the projection of the trajectory of the notches of the transfer element (28; 56) on a horizontal plane intersecting the projection of the trajectory of the notches (24) of the gripping disk(s) (23) on the same horizontal plane at the entry of the transfer device (4), and means for driving the transfer element (28; 56) in rotation, arranged so as to rotate it in the opposite direction of rotation of the gripping disks (23); and
• a device (5) for detaching the cut branches (S) that is arranged at the exit of the transfer device (4) and includes means for capturing cut branches (S) and pulling them in the opposite direction of the transfer device (4), with a traction force higher than the resistance of the tendrils that attach the cut branches (4) to the tying wire (F).

9. Machine according to one of claims 1 to 8, **characterised in that** the gripping device (3) comprises two gripping disks (23) that are spaced from each other, a part of the transfer element (4) extending between the two gripping disks (23).

10. Machine according to one of claims 1 to 9, **characterised in that** the transfer element (28) is formed by a belt (28) provided on its external surface with projections (29) that are distributed along the length of the belt (28) and are spaced from each other such that the space between two consecutive projections (29) forms a notch for gripping and entraining the cut branches (S).

11. Machine according to one of claims 1 to 9, **characterised in that** the transfer element (56) is formed by a wheel with an external toothing (56), the teeth being so dimensioned that the space between two successive teeth (29) forms a notch for gripping and dragging along the cut branches (S).

12. Machine according to one of claims 1 to 11, **characterised in that** the capturing and traction means for the cut branches (S) comprise:
- two wheel sets arranged at the exit of the transfer device (4) and rotatably supported by the supporting frame (1) such that their rotation axes are parallel and preferably vertical, and that the circumferential surfaces of the two wheel sets are pressed against each other, and
- means for rotating the wheel sets, arranged to make the latter turn in directions that are opposite and suited that the wheel sets pull the cut branches (S) captured between the circumferential surfaces of the two wheel sets in a direction opposite to the transfer device (4).

13. Machine according to claim 12, in which the rotation axes of the wheel sets are vertical and the wheel sets are arranged in the longitudinal direction of the supporting frame (1), **characterised in that** the wheel set closest to the fastening means of the supporting frame (1) to the agricultural vehicle (T) comprises two wheels (33, 34} that are spaced from each other and the circumferential surfaces of which are pressed against that of the other wheel set, the transfer element (28; 56) being arranged with respect to the supporting frame (1) such that the transfer element (28; 56) extends in the space between the two wheels (33, 34) and that the cut branches (S) leave the notches of the transfer element (28; 56) in the plane defined by the transversal direction of the supporting frame (1) and the contact line between the two wheel sets.

14. Machine according to one of claims 12 or 13, **characterised in that** the circumferential surface of the wheel sets, if applicable of the wheels, is structured.

15. Machine according to one of claims 1 to 14, **characterised in that** the gantry (2) comprises a vertical gantry mast (12) that is fastened to the supporting frame (1), a first arm (13) attached perpendicularly to the upper part of the gantry mast (12) and extending in the longitudinal direction of the supporting frame (1), on the side opposite to the transfer device (4) and to the detaching device (5) a second arm (14) attached to the first arm (13) so as to swivel and overhanging from the supporting frame (1), and a means for controlling the swivelling movement of the second arm (14) with respect to the first arm (13), the gripping device (3) being connected to the end region of the overhanging second arm of the supporting frame (1).

16. Machine according to one of claims 1 to 15, **characterised in that** the arm assembly of the gantry (2), if applicable the second arm (14), is telescopic in order to allow adjusting the distance of the overhang of its end with respect to the supporting frame (1).

17. Machine according to one of claims 1 to 16, **characterised in that** the supporting frame (1) comprises a mounting plate (6) for fastening to the agricultural vehicle (T), a vertical mast (7) attached to the plate (6) and a movable frame (8) including a vertical slide (9) mounted so as to be vertically movable on the mast (7), and a means for controlling the movement of the vertical slide (9), the gantry (2) being attached to the movable frame (8).

18. Machine according to claim 17, **characterised in that** the mobile frame (8) furthermore comprises at least one beam forming a slideway (10) attached to the vertical slide (9) horizontally and in the direction transverse to the supporting frame (1), at least one horizontal slide (11) that is movably received in the beam and forms a slideway (11), and a means for controlling the movement of the horizontal slide (11), the boom (2), the transfer device (4) and the detaching device (5) being fastened to the horizontal slide (11).

19. Machine according to one of claims 1 to 18, **characterised in that** a guide plate (47) is fastened to the supporting frame (1), if applicable to the or to a horizontal slide (11), and extends downwards and opposite the supporting frame (1), the guide plate (47) serving as a resting surface for the lower portions of the cut branches (S) when they are dragged along by the gripping disks (23) and the transfer element (28; 56), to bend them upwards in order to release them from a tying wire (F) that extends in the lower area of the posts (P).

20. Agricultural vehicle equipped with a machine as defined in one of claims 1 to 19.

21. Agricultural vehicle according to claim 20, **characterised in that** it is equipped with a shredder positioned to shred the cut branches lying on the ground.
